(19) Europäisches Patentamt / European Patent Office / Office européen des brevets

(11) **EP 4 657 808 A1**

(12) **EUROPEAN PATENT APPLICATION**
published in accordance with Art. 153(4) EPC

(43) Date of publication:
**03.12.2025 Bulletin 2025/49**

(21) Application number: **24756174.9**

(22) Date of filing: **06.02.2024**

(51) International Patent Classification (IPC):
**H04L 27/26** (2006.01)

(52) Cooperative Patent Classification (CPC):
**H04L 27/26; H04W 56/00**

(86) International application number:
**PCT/CN2024/076461**

(87) International publication number:
**WO 2024/169801 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **17.02.2023 CN 202310172364**

(71) Applicant: **Huawei Technologies Co., Ltd.
Shenzhen, Guangdong 518129 (CN)**

(72) Inventors:
• **LUO, Zhihu**
  **Shenzhen, Guangdong 518129 (CN)**
• **JIN, Zhe**
  **Shenzhen, Guangdong 518129 (CN)**
• **QU, Weilin**
  **Shenzhen, Guangdong 518129 (CN)**
• **HAN, Chao**
  **Shenzhen, Guangdong 518129 (CN)**

(74) Representative: **Pfenning, Meinig & Partner mbB
Patent- und Rechtsanwälte
Theresienhöhe 11a
80339 München (DE)**

(54) **SIGNAL TRANSMISSION METHOD AND COMMUNICATION APPARATUS**

(57) Embodiments of this application provide a signal transmission method and a communication apparatus, to improve sensitivity of WUS reception. The method includes: generating a first signal based on a first sequence, where the first sequence is a complex sequence, and the first signal indicates a first terminal device whether to enter a first state; generating a first synchronization signal based on a second sequence, where the second sequence is a first synchronization sequence or a second synchronization sequence, the first synchronization sequence is a complex sequence, the second synchronization sequence is a binary sequence, and the first synchronization signal is for time and/or frequency synchronization; and sending the first signal and the first synchronization signal to the first terminal device.

[FIG. 13]

**Description**

This application claims priority to Chinese Patent Application No. 202310172364.7, filed with the China National Intellectual Property Administration on February 17, 2023 and entitled "SIGNAL TRANSMISSION METHOD AND COMMUNICATION APPARATUS", which is incorporated herein by reference in its entirety.

TECHNICAL FIELD

This application relates to the wireless communication field, and in particular, to a signal transmission method and a communication apparatus.

BACKGROUND

To reduce power consumption of a terminal device, the 3rd Generation Partnership Project (3rd generation partnership project, 3GPP) Release 18 (release 18, rel-18) protocol stipulates that the terminal device monitors a wake-up signal (wake-up signal, WUS) by using a low-consumption wake-up radio/wake-up receiver (wake-up radio/wake-up receiver, WUR), to determine whether to wake up a main receiver of the terminal device.

Currently, a WUS is usually modulated using amplitude keying (amplitude shift keying, ASK) or frequency-shift keying (frequency-shift keying, FSK), and a WUR demodulates the WUS through envelope detection. However, demodulating a WUS using the envelope detection method results in a demodulated WUS retaining only amplitude information, causing poor sensitivity of receiving the WUS. Therefore, how to improve sensitivity of WUS reception is a problem to be urgently resolved currently.

SUMMARY

Embodiments of this application provide a signal transmission method and a communication apparatus, to improve sensitivity of WUS reception.

To achieve the foregoing objectives, the following technical solutions are used in embodiments of this application.

According to a first aspect, a signal transmission method is provided. The method may be performed by a network device, or may be performed by a component of the network device, such as a processor, a chip, or a chip system of the network device, or may be implemented by a logical module or software that can implement all or some functions of the network device. An example in which the method is performed by the network device is used below for description. The method includes: generating a first signal based on a first sequence; generating a first synchronization signal based on a second sequence; and sending the first signal and the first synchronization signal to a first terminal device. The first sequence is a complex sequence, and the first signal indicates the first terminal device whether to enter a first state. The second sequence is a first synchronization sequence or a second synchronization sequence, the first synchronization sequence is a complex sequence, the second synchronization sequence is a binary sequence, and the first synchronization signal is for time and/or frequency synchronization.

In this embodiment of this application, the network device sends the first synchronization signal and the first signal to the first terminal device. Therefore, the first terminal device may obtain time and/or frequency synchronization by using the first synchronization signal, so as to determine a start moment of an OFDM symbol, duration of the OFDM symbol, a frequency domain range, or the like, so that the first terminal device can better determine time domain and/or frequency domain information for receiving the first signal. Further, because the first signal is generated based on the complex sequence, the first terminal device may receive the first signal through correlation detection, so that not only amplitude information can be obtained, but also phase information can be retained, thereby improving receiver sensitivity of receiving a second signal.

According to a second aspect, a signal transmission method is provided. The method may be performed by a first terminal device, or may be performed by a component of the first terminal device, such as a processor, a chip, or a chip system of the first terminal device, or may be implemented by a logical module or software that can implement all or some functions of the first terminal device. An example in which the method is performed by the first terminal device is used below for description. The method includes: receiving a first signal and a first synchronization signal from a network device; determining, based on the first signal, whether to enter a first state; and obtaining time and/or frequency synchronization based on the first synchronization signal. The first signal is a signal generated based on a first sequence, the first sequence is a complex sequence, the first synchronization signal is a signal generated based on a second sequence, the second sequence includes a first synchronization sequence or a second synchronization sequence, the first synchronization sequence is a complex sequence, and the second synchronization sequence is a binary sequence.

In this embodiment of this application, the network device sends the first synchronization signal and the first signal to the first terminal device. Therefore, the first terminal device may obtain time and/or frequency synchronization by using the first synchronization signal, so as to determine a start moment of an OFDM symbol, duration of the OFDM symbol, a frequency domain range, or the like, so that the first terminal device can better determine time domain and/or frequency domain information for receiving the first signal. Further, because the first signal is generated based on the complex sequence, the first terminal device may receive the first signal through correlation detection, so that not only amplitude information can be obtained, but also phase information can be retained, thereby improving receiver sensitivity of receiving a second signal.

With reference to the first aspect or the second aspect, in a possible implementation, the first synchronization sequence is different from a sequence for generating a PSS and/or an SSS.

In other words, because the first synchronization sequence is different from the sequence for generating the PSS and/or the SSS, when receiving the first synchronization signal, an inventory terminal device in a cell does not mistakenly detect the first synchronization signal as the PSS or the SSS, and therefore cannot obtain incorrect time and/or frequency synchronization, thereby alleviating impact on initial access of the inventory terminal device in the cell.

With reference to the first aspect or the second aspect, in a possible implementation, the first synchronization sequence is the same as a sequence for generating a primary synchronization signal PSS and/or a secondary synchronization signal SSS.

In other words, the first synchronization sequence may continue to use the sequence for generating the PSS and/or the SSS, and carry some or all PCI values, that is, the first synchronization signal may be used for initial access of an inventory terminal device in a cell, and may also be used for time and/or frequency synchronization of the first terminal device. Further, because the first synchronization sequence still uses a related design of the sequence for generating the PSS and/or the SSS, that is, the first terminal device may perform correlation detection by using an existing sequence for generating the PSS and/or the SSS, overheads of receiving a signal by a WUR can be reduced.

With reference to the first aspect or the second aspect, in a possible implementation, a frequency domain resource occupied by the first synchronization signal is greater than or equal to a frequency domain resource occupied by the PSS or the SSS.

In other words, the first synchronization signal may reuse the frequency domain resource of the PSS or the SSS, thereby reducing network resource overheads. Further, for the SSS, the frequency domain resource of the first synchronization signal is greater than the frequency domain resource of the SSS, so that interference from a PBCH can be reduced.

With reference to the first aspect or the second aspect, in a possible implementation, a time domain resource occupied by the first synchronization signal includes a time domain resource occupied by the PSS and/or a time domain resource occupied by the SSS.

In other words, when the first synchronization sequence continues to use the sequence for generating the PSS and/or the SSS, and the time domain resource of the first synchronization signal includes the PSS and/or the SSS, the network device may reuse a time-frequency resource occupied by an SSB to send the first signal, thereby further reducing network resource overheads.

With reference to the first aspect or the second aspect, in a possible implementation, the second sequence is the first synchronization sequence, and the first synchronization signal is an SSB.

In other words, that the first synchronization signal is an SSB means that the first synchronization signal completely reuses the SSB, thereby further reducing network resource overheads.

With reference to the first aspect or the second aspect, in a possible implementation, the second sequence is the first synchronization sequence; and the first synchronization signal is a cell defining synchronization signal/physical broadcast channel block CD-SSB, and a frequency domain resource occupied by the first signal includes the CD-SSB; or the first synchronization signal is a non-cell defining synchronization signal/physical broadcast channel block NCD-SSB, and a frequency domain resource occupied by the first signal does not include a CD-SSB.

With reference to the first aspect or the second aspect, in a possible implementation, the second sequence is the second synchronization sequence; and the time domain resource occupied by the first synchronization signal at least partially overlaps the time domain resource occupied by the first signal.

In other words, the first signal and the first synchronization signal may reuse a part of a time-frequency resource for each other, thereby reducing network resource overheads.

With reference to the first aspect or the second aspect, in a possible implementation, the first signal occupies N orthogonal frequency division multiplexing OFDM symbols in M OFDM symbols, where the M OFDM symbols are OFDM symbols occupied by the first synchronization signal, the N OFDM symbols are symbols that carry first elements in the M OFDM symbols, the first elements are ON elements in the second synchronization sequence, M is greater than or equal to N, M and N are integers, and N is greater than or equal to 1.

In other words, the first signal may occupy OFDM symbols corresponding to N ON elements in the M OFDM symbols occupied by the first synchronization signal.

With reference to the first aspect or the second aspect, in a possible implementation, the first sequence carries at least some information in target identification information, and the target identification information includes one or more of the following: identification information of a target terminal device, identification information of a target cell, identification information of a target terminal device group, identification information of a tracking area, or identification information of a radio access network RAN area.

With reference to the first aspect or the second aspect, in a possible implementation, the first sequence includes one or more of the following sequences: a Zadoff-Chu sequence, an m-sequence, or a gold sequence.

With reference to the first aspect or the second aspect, in a possible implementation, the time domain resource occupied by the first synchronization signal is different from the time domain resource occupied by the first signal; and a first time interval between an end location of the time domain resource occupied by the first synchronization signal and a start location of the time domain resource occupied by the first signal is predefined, or is negotiated by the network device and the first terminal device in advance, or is configured by the network device for the first terminal device. This is not specifically limited in embodiments of this application.

In other words, a time sequence relationship and a time offset may be defined between the first synchronization signal and the first signal, so that the first terminal device can determine, by receiving the first synchronization signal and the first time interval, whether the first synchronization signal is before or after the first signal. Further, the first terminal device may determine, based on the first time interval, the start location of the time domain resource occupied by the first signal.

With reference to the first aspect, in a possible implementation, the second sequence is the second synchronization sequence, and the method provided in the first aspect further includes: generating the second signal based on the third sequence, where the third sequence is a binary sequence, the second signal indicates the second terminal device whether to enter the first state, and the time domain resource occupied by the second signal is different from the time domain resource occupied by the first synchronization signal; and sending the second signal and the first synchronization signal to the second terminal device.

It may be understood that the first terminal device supports receiving of a signal generated based on a complex sequence, and further supports receiving of a signal generated based on a binary sequence, so that the first terminal device and the second terminal device can reuse the first synchronization signal.

In other words, the network device may send the first synchronization signal to the first terminal device and the second terminal device, to reuse the first synchronization signal, thereby reducing network resource overheads.

With reference to the first aspect, in a possible implementation, the time domain resource occupied by the second signal at least partially overlaps the time domain resource occupied by the first signal.

In other words, the first signal may be superimposed on the second signal to reuse a time-frequency resource of the second signal, thereby further reducing network resource overheads.

With reference to the first aspect, in a possible implementation, the first signal occupies the N OFDM symbols in the M OFDM symbols, where the M OFDM symbols are OFDM symbols occupied by the second signal, the N OFDM symbols are symbols that carry first elements in the M OFDM symbols, the first elements are ON elements in the third sequence, M is greater than or equal to N, M and N are integers, and N is greater than or equal to 1.

In other words, the first signal may occupy N ON symbols in the M OFDM symbols occupied by the second signal.

With reference to the first aspect, in a possible implementation, the second sequence is the first synchronization sequence, and the method provided in the first aspect further includes: generating a second synchronization signal based on a third synchronization sequence, where the third synchronization sequence is a binary sequence, and the second synchronization signal is used for time and/or frequency synchronization; and sending the second synchronization signal to a second terminal device.

In other words, the network device may further send the second synchronization signal, so that the second terminal device obtains time and/or frequency synchronization.

With reference to the first aspect, in a possible implementation, a time domain resource occupied by the second synchronization signal at least partially overlaps the time domain resource occupied by the first signal and/or the time domain resource occupied by the first synchronization signal.

In other words, the first signal and/or the first synchronization signal may be superimposed on the second synchronization signal to reuse a time-frequency resource of the second synchronization signal, thereby further reducing network resource overheads.

With reference to the first aspect, in a possible implementation, the first signal and/or the first synchronization signal occupy/occupies N OFDM symbols in M OFDM symbols, where the M OFDM symbols are OFDM symbols occupied by the second synchronization signal, the N OFDM symbols are symbols that carry first elements in the M OFDM symbols, the first elements are ON elements in the third synchronization sequence, M is greater than or equal to N, M and N are integers, and N is greater than or equal to 1.

In other words, the first signal and/or the first synchronization signal may occupy N ON symbols in the M OFDM symbols occupied by the second synchronization signal.

With reference to the first aspect, in a possible implementation, the method provided in the first aspect further includes:

generating a second signal based on a third sequence, where the third sequence is a binary sequence, the second signal indicates the second terminal device whether to enter the first state, and a time domain resource occupied by the second signal is different from the time domain resource occupied by the second synchronization signal; and sending the second signal to the second terminal device.

In other words, the network device may further send the second signal, to indicate whether the second terminal device enters the first state.

With reference to the first aspect, in a possible implementation, the time domain resource occupied by the second signal at least partially overlaps the time domain resource occupied by the first signal and/or the time domain resource occupied by the first synchronization signal.

In other words, the first signal and/or the first synchronization signal may be superimposed on the second signal to reuse a time-frequency resource of the second signal, thereby further reducing network resource overheads.

With reference to the first aspect, in a possible implementation, the first signal and/or the first synchronization signal occupy/occupies N OFDM symbols in M OFDM symbols, where the M OFDM symbols are OFDM symbols occupied by the second signal, the N OFDM symbols are symbols that carry first elements in the M OFDM symbols, the first elements are ON elements in the third sequence, M is greater than or equal to N, M and N are integers, and N is greater than or equal to 1.

In other words, the first signal and/or the first synchronization signal may occupy N ON symbols in the M OFDM symbols occupied by the second signal.

With reference to the first aspect, in a possible implementation, the method provided in the first aspect further includes: receiving capability information from the first terminal device and/or the second terminal device, where the capability information includes one or more of the following: whether on-off keying OOK modulation is supported, whether frequency-shift keying FSK modulation is supported, or whether generation of a signal based on a complex sequence is supported.

With reference to the second aspect, in a possible implementation, the method provided in the second aspect further includes: sending capability information to the network device, where the capability information includes one or more of the following: whether OOK modulation is supported, whether FSK modulation is supported, or whether generation of a signal based on a complex sequence is supported.

According to a third aspect, a communication apparatus configured to implement the foregoing methods is provided. The communication apparatus may be the network device in the first aspect or any implementation of the first aspect, or an apparatus including the network device, or an apparatus included in the network device, such as a chip. Alternatively, the communication apparatus may be the first terminal device in the second aspect or any implementation of the second aspect, or an apparatus including the first terminal device, or an apparatus included in the first terminal device, such as a chip. The communication apparatus includes a corresponding module, unit, or means (means) for implementing the foregoing method. The module, unit, or means may be implemented by using hardware, software, or hardware executing corresponding software. The hardware or the software includes one or more modules or units corresponding to the foregoing functions.

In some possible designs, the communication apparatus may include a processing module and a transceiver module. The transceiver module may also be referred to as a transceiver unit, and is configured to implement a sending function and/or a receiving function in any one of the foregoing aspects and any one of the possible implementations of the foregoing aspects. The transceiver module may include a transceiver circuit, a transceiver machine, a transceiver, or a communication interface. The processing module may be configured to implement a processing function in any one of the foregoing aspects and any one of the possible implementations of the foregoing aspects.

In some possible designs, the transceiver module includes a sending module and a receiving module, respectively configured to implement the sending function and the receiving function in any one of the foregoing aspects and any one of the possible implementations of the foregoing aspects.

According to a fourth aspect, a communication apparatus is provided, including a processor and a memory. The memory is configured to store computer instructions. When the processor executes the instructions, the communication apparatus is caused to perform the method according to any one of the foregoing aspects. The communication apparatus may be the network device in the first aspect or any implementation of the first aspect, or an apparatus including the network device, or an apparatus included in the network device, such as a chip. Alternatively, the communication apparatus may be the first terminal device in the second aspect or any implementation of the second aspect, or an apparatus including the first terminal device, or an apparatus included in the first terminal device, such as a chip.

According to a fifth aspect, a communication apparatus is provided, including a processor and a communication interface. The communication interface is configured to communicate with a module outside the communication apparatus. The processor is configured to execute a computer program or instructions, so that the communication apparatus performs the method according to any one of the foregoing aspects. The communication apparatus may be the network device in the first aspect or any implementation of the first aspect, or an apparatus including the network device, or an apparatus included in the network device, such as a chip. Alternatively, the communication apparatus may be the first terminal device in the second aspect or any implementation of the second aspect, or an apparatus including the first terminal device, or an apparatus included in the first terminal device, such as a chip.

According to a sixth aspect, a communication apparatus is provided, including at least one processor. The processor is configured to execute a computer program or instructions stored in a memory, so that the communication apparatus performs the method according to any one of the foregoing aspects. The memory may be coupled to the processor, or may be independent of the processor. The communication apparatus may be the network device in the first aspect or any implementation of the first aspect, or an apparatus including the network device, or an apparatus included in the network device, such as a chip. Alternatively, the communication apparatus may be the first terminal device in the second aspect or any implementation of the second aspect, or an apparatus including the first terminal device, or an apparatus included in the first terminal device, such as a chip.

According to a seventh aspect, a computer-readable storage medium is provided. The computer-readable storage medium stores a computer program or instructions. When the computer program or the instructions are run on a communication apparatus, the communication apparatus is caused to perform the method according to any one of the foregoing aspects or any one of the implementations of the foregoing aspects.

According to an eighth aspect, a computer program product including instructions is provided. When the computer program product runs on a communication apparatus, the communication apparatus is caused to perform the method according to any one of the foregoing aspects or any one of the implementations of the foregoing aspects.

According to a ninth aspect, a communication apparatus is provided (for example, the communication apparatus may be a chip or a chip system). The communication apparatus includes a processor, configured to implement the functions in any one of the foregoing aspects or any one of the implementations of the foregoing aspects.

In some possible designs, the communication apparatus includes a memory, and the memory is configured to store necessary program instructions and data.

In some possible designs, when the apparatus is a chip system, the apparatus may include a chip, or may include a chip and another discrete component.

It may be understood that, when the communication apparatus provided in any one of the third aspect to the ninth aspect is a chip, the foregoing sending action/function may be understood as an output, and the receiving action/function may be understood as an input.

For technical effects brought by any design manner of the third aspect to the ninth aspect, refer to technical effects brought by different design manners of the first aspect or the second aspect. Details are not described herein again.

According to a tenth aspect, a communication method is provided. The communication method includes the method according to the first aspect or any one of the implementations of the first aspect and the method according to the second aspect or any one of the implementations of the second aspect.

According to an eleventh aspect, a communication system is provided. The communication system includes the network device in the foregoing aspects and the terminal device in the foregoing aspects.

BRIEF DESCRIPTION OF DRAWINGS

FIG. 1 is a diagram of a time domain structure of a DRX cycle according to an embodiment of this application;
FIG. 2 is a diagram of a CP-OFDM processing procedure module according to an embodiment of this application;
FIG. 3 is a diagram of an SSB time-frequency structure according to an embodiment of this application;
FIG. 4 is a diagram of SSB beam sweeping according to an embodiment of this application;
FIG. 5 is a diagram 1 of a structure of a terminal device according to an embodiment of this application;
FIG. 6 is a diagram of an ASK modulation process according to an embodiment of this application;
FIG. 7 is a diagram of an FSK modulation process according to an embodiment of this application;
FIG. 8 is a diagram of an ON symbol structure according to an embodiment of this application;
FIG. 9 is a diagram of a structure of a communication system according to an embodiment of this application;
FIG. 10 is a diagram of a structure of a communication apparatus according to an embodiment of this application;
FIG. 11 is a diagram 2 of a structure of a terminal device according to an embodiment of this application;
FIG. 12 is a diagram of a structure of a base station according to an embodiment of this application;
FIG. 13 is a schematic flowchart 1 of a signal transmission method according to an embodiment of this application;
FIG. 14 is a diagram 1 of a time-frequency location relationship between a first synchronization signal and a first signal according to an embodiment of this application;
FIG. 15 is a diagram 2 of a time-frequency location relationship between a first synchronization signal and a first signal according to an embodiment of this application;
FIG. 16 is a diagram of a mapping relationship between a second sequence and an OFDM symbol according to an embodiment of this application;

FIG. 17 is a diagram of a time-frequency resource occupied between a first synchronization signal and a first signal according to an embodiment of this application;

FIG. 18 is a diagram 1 of signal time-frequency resource superposition according to an embodiment of this application;

FIG. 19 is a diagram of a first time interval according to an embodiment of this application;

FIG. 20 is a diagram of a first time interval in a multi-beam case according to an embodiment of this application;

FIG. 21 is a schematic flowchart 2 of a signal transmission method according to an embodiment of this application;

FIG. 22 is a diagram 2 of signal time-frequency resource superposition according to an embodiment of this application;

FIG. 23 is a schematic flowchart 3 of a signal transmission method according to an embodiment of this application;

FIG. 24 is a diagram 3 of signal time-frequency resource superposition according to an embodiment of this application;

FIG. 25 is a diagram 4 of signal time-frequency resource superposition according to an embodiment of this application;

FIG. 26 is a diagram 5 of signal time-frequency resource superposition according to an embodiment of this application;

FIG. 27 is a diagram of a structure of a network device according to an embodiment of this application; and

FIG. 28 is a diagram 3 of a structure of a terminal device according to an embodiment of this application.

## DESCRIPTION OF EMBODIMENTS

For ease of understanding of technical solutions provided in embodiments of this application, technologies related to this application are first described briefly. The brief descriptions are as follows:

1. Internet of things (internet of things, IoT)

IoT is the "internet of things connected". The IoT extends a user end of the internet to any objects, so that the objects can perform information exchange and communication with each other. Such a communication manner is also referred to as machine type communication (machine type communication, MTC). A communication node is referred to as a terminal device. Conventional IoT applications include smart grid, smart agriculture, smart transportation, smart household, environment detection, and the like.

The internet of things needs to be applied to a plurality of scenarios, for example, an outdoor-to-indoor scenario and an overground-to-underground scenario. Therefore, many special requirements are imposed on a design of the internet of things. For example, a terminal device in some scenarios is used in an environment with poor wireless coverage, for example, an electric meter or a water meter is usually installed indoors or even in a place, for example, a basement, with a quite poor wireless network signal. Therefore, a coverage enhancement technology is required. Alternatively, a quantity of terminal devices in some scenarios is far greater than a quantity of devices for human-to-human communication. In other words, large-scale deployment is required. Therefore, the terminal device needs to be obtained and used at quite low costs. Alternatively, a data packet transmitted by a terminal device in some scenarios is very small and is insensitive to latency. Therefore, the terminal device is required to support low-rate communication. Alternatively, in most cases, a terminal device is battery-powered. However, in many scenarios, the terminal device is required to be used for at least 10 years without a need of replacing the battery. Therefore, the terminal device is required to operate with extremely low electric power consumption.

The 3GPP protocol provides a method for supporting the internet of things with extremely low complexity and low costs in a cellular network, and introduces different power consumption reduction technologies in different releases, which are described below separately.

2. Radio resource control (radio resource control, RRC) state

The RRC state may include an RRC idle state (RRC_IDLE), an RRC inactive state (RRC_INACTIVE), and an RRC connected state (RRC_CONNECTED) in a new radio (new radio, NR) system. When there is no signaling and/or service data reception or transmission for a terminal device, the terminal device may enter an idle state or an inactive state to reduce power consumption of the terminal device.

The RRC_IDLE state, referred to as an idle state, is a state in which the terminal device completes camping on a cell but does not perform a random access procedure. The terminal device usually enters the idle state after the terminal device is powered on or after an RRC connection is released. When the terminal device is in the idle state, an air interface connection between the terminal device and a network device is disconnected, context information is no longer stored, and the terminal device receives only limited downlink information and does not send uplink information.

It should be understood that the uplink information may be information sent by the terminal device to the network device, and the downlink information may be information sent by the network device to the terminal device. The limited downlink information may include downlink synchronization information required by the terminal device to completing camping on a cell, information included in a master information block (master information block, MIB), information included in a system information block (system information block, SIB) 1 (or referred to as remaining minimum system information (remaining minimum system information, RMSI)), and the like. For details, refer to descriptions of the related 3GPP standard protocol. Details are not described herein.

The RRC_CONNECTED state may also be referred to as a connected state, and corresponds to the idle state. The connected state is a state in which the terminal device has not released an RRC connection after completing a random access procedure. When the terminal device is in the connected state, the terminal device establishes an air interface connection to the network device, and communicates with the network device through the air interface connection. When the terminal device is in the idle state, the terminal device switches to the connected state after completing the random access procedure. When the terminal device is in the connected state, the terminal device switches to the idle state after completing the RRC connection release.

The RRC_INACTIVE state may also be referred to as an inactive state. The inactive state is a state between the connected state and the idle state. For the terminal device in the inactive state, a user plane bearer of an air interface is suspended (suspend), and a user plane bearer and a control plane bearer between the network device and a core network (core network, CN) are still maintained. When the terminal device initiates a call or a service request, the user plane bearer of the air interface needs to be activated, and the existing user plane bearer and control plane bearer between the network device and the CN are reused. It may be understood that, when the terminal device is in the inactive state, the air interface connection between the terminal device and the network device is disconnected, but the context information continues to be stored. When the terminal device enters the connected state from the inactive state, the terminal device can quickly restore to the connected state based on the stored context information.

3. Discontinuous reception (discontinuous reception, DRX)

Generally, transmission requirements of signaling and service data are usually bursty. There is data transmission in a period of time, but there is no data transmission in a subsequent long period of time. Therefore, to reduce power consumption of the terminal device, DRX may be configured for the terminal device in NR. To be specific, the terminal device enters a sleep state at some time (which may be defined as sleep time or inactive time (inactive time)), and does not listen to DCI of a preset type on a PDCCH. When the terminal device needs to listen to the DCI of the preset type, the terminal device wakes up (wake up) from the sleep state and switches to the active state. In the active state, the terminal device needs to listen to the DCI of the preset type on the PDCCH.

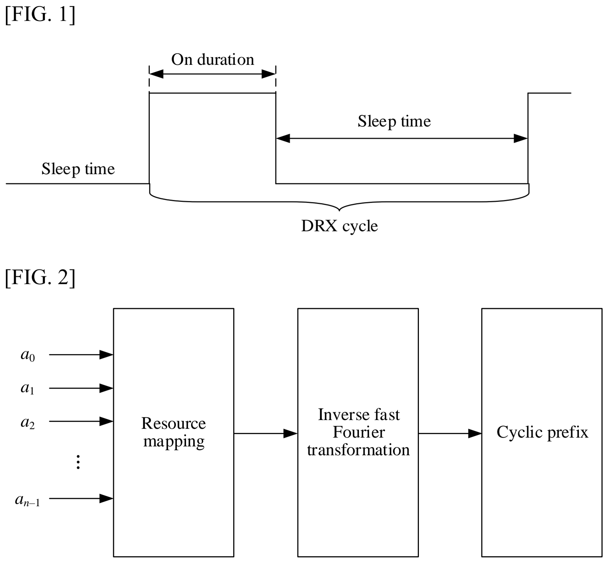

For example, as shown in FIG. 1, a basic time unit in a DRX state is one DRX cycle (DRX cycle), and one DRX cycle includes one sleep time and one on duration (on duration) or paging occasion (paging occasion, PO). In a case of entering the on duration in the DRX cycle, a terminal device is woken up from a sleep state and switches to an active state, and listens to DCI of a preset type on a PDCCH. Once scheduling DCI is received on the PDCCH, the terminal device restarts an inactive timer for timing. If the inactive timer expires finally, the terminal device returns to the sleep state, that is, enters the sleep time. The terminal device in the sleep time may completely turn off communication components such as a radio frequency transceiver and a baseband processor to reduce power consumption. For example, for NR, in sleep time in connected DRX (connected DRX, C-DRX), the terminal device may choose, based on an implementation, to turn off communication components such as a radio frequency transceiver (or a receiver) and a baseband processor to reduce power consumption. Alternatively, although a radio frequency component is turned on, the terminal device performs only some low-power-consumption listening, for example, listening to some messages that need to be listened to by the terminal device, such as a paging message, a broadcast message, or a system message, and does not need to listen to the DCI of the preset type on the PDCCH.

For idle or inactive DRX, the terminal device may listen to, on the paging occasion (paging occasion, PO), paging DCI scrambled by a paging radio network temporary identifier (paging radio network temporary identifier, P-RNTI) on the PDCCH, and receive paging information based on the paging DCI. The paging information may include a paging message (paging message) and/or updated system information. The paging message may indicate the terminal device to establish or resume an RRC connection, and the updated system information may be used by the terminal device to learn of changed system information. The paging message may be carried on a physical downlink shared channel (physical downlink shared channel, PDSCH), and the updated system information may be carried on system information block (system information block, SIB) 6 to SIB8.

In the NR system, the PO may be a group of PDCCH monitoring occasions (monitoring occasion, MO). One PO may include a plurality of time periods. For example, the time period may be represented by using a subframe or an orthogonal frequency division multiplexing (orthogonal frequency division multiplexing, OFDM) symbol. The network device may send the paging DCI on the PO.

For connected DRX (connected DRX, C-DRX), the terminal device may listen to the DCI of the preset type on the PDCCH within the on duration.

For example, the DCI of the preset type on the PDCCH may be DCI scrambled by using one or more of the following identifiers: a cell radio network temporary identifier (cell radio network temporary identifier, C-RNTI), a configured scheduling radio network temporary identifier (configured scheduling RNTI, CS-RNTI), an interruption RNTI (interruption RNTI, INT-RNTI), a slot format indicator RNTI (slot format indicator RNTI, SFI-RNTI), and a semi-persistent channel state information RNTI (semi-persistent channel state information RNTI, SP-CSI-RNTI). For details, refer to descriptions of the related 3GPP standard protocol. Details are not described herein.

Before receiving a paging message, the terminal device cannot determine whether the network device actually sends the paging message to the terminal device. Therefore, the terminal device wakes up in each PO, detects paging DCI, and then receives, based on the paging DCI, a PDSCH that carries the paging message. However, during actual application, a probability that the network device actually sends paging to one terminal device in each PO is relatively low. Therefore, listening to paging DCI on a PDCCH by the terminal device in most POs causes useless power consumption overheads.

Similarly, in C-DRX, not all on duration in each DRX cycle has signaling or data to be sent to the terminal device. Therefore, when the terminal device listens to the DCI of the preset type on the PDCCH in the on duration in each DRX cycle, useless power consumption overheads are also caused.

4. WUS

To further reduce power consumption of the terminal device, a WUS used for C-DRX is introduced in Rel-16, and a paging early identification (paging early identification, PEI) is introduced in Rel-17. For the WUS used for C-DRX, by detecting, before each on duration, a WUS sent by the network device, the terminal device learns whether the DCI of the preset type needs to be listened to on the PDCCH within the on duration. For example, if the network device sends the WUS to indicate the terminal device not to wake up from the sleep state, the terminal device does not wake up, and therefore does not need to listen to the DCI of the preset type on the PDCCH within the on duration. It may be understood that power consumption required by the terminal device to detect the WUS is less than power consumption required for enabling complete on duration, so that power consumption of the terminal device can be effectively reduced.

The PEI indicates whether there is a paging message in a PO corresponding to the terminal device. Specifically, before one or more POs, the network device may send the PEI to the terminal device, to notify the terminal device whether the one or more POs include the paging message of the terminal device. If the PEI indicates that the one or more POs do not include the paging message of the terminal device, the terminal device may skip listening on the one or more POs, and enter the sleep state to save energy. If the PEI indicates that the one or more POs include the paging message of the terminal device, the terminal device needs to listen on the one or more POs.

It should be understood that, in the NR system, the network device sends a downlink signal based on an OFDM technology. The following separately describes the OFDM technology and a time-frequency resource (time domain and frequency domain) of the NR system.

5. OFDM technology

A principle of the OFDM technology is as follows: A plurality of subchannels are obtained through division in frequency domain, serial-to-parallel conversion is performed on to-be-transmitted data to obtain a sequence for parallel transmission, and each element in the sequence is modulated to a subcarrier (subcarrier) corresponding to each subchannel for transmission. Therefore, in time domain, the to-be-transmitted data is transmitted on a plurality of subcarriers superimposed in space, where the plurality of subcarriers are orthogonal to each other. Further, when a signal is received, the plurality of subcarriers may be separated, and then each subcarrier is demodulated, to obtain the to-be-transmitted data.

For example, a process of generating a downlink signal waveform is described by using a cyclic prefix orthogonal frequency division multiplexing (conventional OFDM using a cyclic prefix, CP-OFDM) technology as an example. As shown in FIG. 2, after to-be-transmitted data is processed, a frequency domain sequence $A=[a_0, a_1, ..., a_{n-1}]$ may be obtained, where n is a quantity of subcarriers. Resource mapping is performed on the frequency domain sequence A to respectively map n elements in the frequency domain sequence A to the n subcarriers, then inverse fast Fourier transformation (inverse fast fourier transformation, IFFT) is performed, and a cyclic prefix (cyclic prefix, CP) is added to obtain an OFDM symbol.

It should be understood that, in embodiments of this application, a quantity of elements included in a sequence may be referred to as a sequence length. The two have a same meaning, and may be interchanged for description. This is uniformly described herein, and details are not described below again.

6. Time-frequency resource of the NR system

A time domain of the NR system is represented in a time unit $T_c = 1/(\Delta f_{max} \cdot N_f)$, where $\Delta f_{max} = 480 \times 10^3$ Hz, and $N_f = 4096$.

A constant is $\kappa = T_s/T_c = 64$, where $T_s = 1/(\Delta f_{ref} \cdot N_{f,ref})$, $\Delta f_{ref} = 15 \times 10^3$ Hz, and $N_{f,ref} = 2048$.

The following separately describes a parameter set, a time domain resource, and a frequency domain resource.

6.1. Parameter set (numerology)

The parameter set supported by the NR system is shown in Table 1. In Table 1, a 1st column represents a subcarrier spacing (subcarrier spacing, SCS) configuration $\mu$, and a 2nd column $\Delta f$ represents a subcarrier spacing.

Table 1

| $\mu$ | $\Delta f = 2^{\mu} \cdot 15$ [kHz] |
|---|---|
| 0 | 15 |
| 1 | 30 |
| 2 | 60 |
| 3 | 120 |
| 4 | 240 |

6.2. Time domain resource

Uplink transmission in the NR system may form a plurality of radio frames (frame). Duration of each radio frame is $T_f = (\Delta f_{max} N_f/100) = 10$ ms. Each radio frame may include 10 subframes with a duration of $T_{sf} = (\Delta f_{max} N_f/1000) = 1$ ms. 10 subframes in one radio frame may be arranged in sequence. For example, 10 subframes in one radio frame may be sorted in a sequence of a subframe #0 to a subframe #9. It may be understood that numbers and the sequence of the subframe #0 to the subframe #9 are merely an example. For example, numbering may alternatively start with #1, and therefore one radio frame includes a subframe #1 to a subframe #10. For another example, 10 subframes may be sorted in descending order, and therefore one radio frame includes a subframe #9 to a subframe #0. This is not specifically limited in embodiments of this application.

In the NR system, one subframe may include several slots (slot). For the subcarrier spacing configuration $\mu$, slots may be numbered in ascending order $n_s^{\mu} \in \left\{0, ..., N_{slot}^{subframe,\mu} - 1\right\}$ in one subframe, and may be numbered in ascending order $n_{s,f}^{\mu} \in \left\{0, ..., N_{slot}^{frame,\mu} - 1\right\}$ in one radio frame. There are $N_{symb}^{slot}$ consecutive OFDM symbols in one slot, as shown in Table 2 and Table 3. A start of a slot $n_s^{\mu}$ in one subframe is aligned in time with a start of an OFDM symbol $n_s^{\mu} N_{symb}^{slot}$ in a same subframe. For example, when one slot includes 14 OFDM symbols, the OFDM symbols may be sorted as an OFDM symbol #0 to an OFDM symbol #13 in chronological order.

Table 2

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

Table 3

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

### 6.3. Frequency domain resource

In the NR system, the frequency domain resource may be classified into a resource element (resource element, RE), a resource block (resource block, RB), and a bandwidth part (bandwidth part, BWP) based on a size of the frequency domain resource, which are separately described below.

### 6.3.1. RE

In the NR system, one subcarrier in frequency domain or one OFDM symbol in time domain may be defined as an RE. The RE is a resource with a minimum granularity at a physical layer. The RE may also be understood as a time-frequency resource, that is, the RE includes a time domain resource and a frequency domain resource.

### 6.3.2. RB

In frequency domain, regardless of a subcarrier spacing, 12 consecutive subcarriers may be defined as one RB in the NR system. At the physical layer, the RB may be referred to as a physical resource block (physical resource block, PRB).

### 6.3.3. BWP

The NR system can support a terminal device in operating in only a part of a system bandwidth, that is, a BWP. Alternatively, the BWP may be a plurality of RBs in a frequency domain resource corresponding to one carrier supported by one cell. For example, a cell covered by a network device (for example, a next-generation radio access network (next-generation radio access network, NG-RAN) device in the NR system) can support two carrier frequencies (referred to as a carrier #1 and a carrier #2 below). A bandwidth of 40 MHz is allocated to the carrier #1 and a bandwidth of 60 MHz is allocated to the carrier #2 in the cell. The BWP may be a bandwidth of 20 MHz in the bandwidth of 40 MHz corresponding to the carrier #1. The bandwidth of 20 MHz includes a plurality of RBs. The terminal device may operate in only the BWP.

It may be understood that, in embodiments of this application, meanings of "carrier frequency", "carrier", and "frequency" are the same. In other words, "carrier frequency", "carrier", and "frequency" are interchangeable for description. This is uniformly described herein, and details are not described below again. It should be further understood that, in embodiments of this application, meanings of "number" and "index" are the same. In other words, "number" and "index" may be interchanged for description. This is uniformly described herein, and details are not described below again.

In the NR system, after the terminal device accesses a network in an initial access procedure, the network may configure an operating BWP for the terminal device by using higher layer signaling (for example, RRC signaling). One to four BWPs may be configured for each terminal device, but only one BWP is active at any moment. In addition to radio resource management (radio resource management, RRM) measurement, the terminal device only receives and sends data in the active BWP. When the terminal device camps on a cell, that is, the terminal device is in an idle state or an inactive state, the terminal device may receive a synchronization signal/physical broadcast channel block (synchronization signal/physical broadcast channel block, SSB) on an initial BWP.

It should be understood that the terminal device needs to first receive the SSB to complete cell camping and network access. The following describes a time-frequency resource of the SSB and carried information.

### 7. SSB

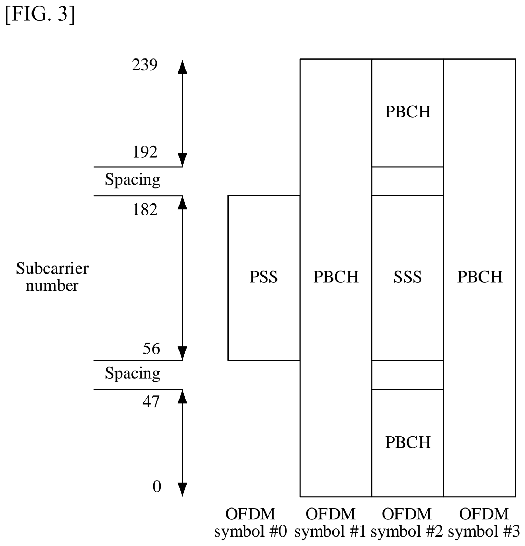

The SSB may be used to obtain time synchronization and frequency synchronization between the terminal device and the network device, a physical cell identifier (physical cell identifier, PCI), or the like. The SSB includes a primary synchronization signal (primary synchronization signal, PSS), a secondary synchronization signal (secondary synchronization signal, SSS), and a physical broadcast channel (physical broadcast channel, PBCH). As shown in FIG. 3, in time domain, one SSB occupies four consecutive OFDM symbols. In frequency domain, one SSB occupies 240 consecutive subcarriers, and the 240 subcarriers are sequentially numbered from 0 to 239 in ascending order of frequencies. The OFDM symbol #0 carries a PSS, the PSS occupies the subcarriers #56 to #182, and the subcarriers #0 to #55 and the subcarriers #183 to #239 do not carry any information, and may be set to 0. The OFDM symbol #2 and the OFDM symbol #3 carry a PBCH, and there is one demodulation reference signal (demodulation reference signal, DMRS) for decoding the PBCH in every four consecutive subcarriers. The OFDM symbol #2 carries an SSS and the PBCH, the SSS occupies the subcarriers #56 to #182, the PBCH occupies the subcarriers #0 to #47 and the subcarriers #192 to #239, and the other subcarriers are set to 0.

The SSB is a periodic signal. For example, a period of the SSB may be 5 ms to 160 ms.

The PSS and the SSS are generated based on an m-sequence and a preset cyclic shift value, and the PSS and the SSS separately carry a part of a PCI index value (or number). The PSS is used as an example below for description.

For example, an NR physical cell includes 1008 PCIs in total, and a PCI value is $N_{ID}^{cell} = 3N_{ID}^{(1)} + N_{ID}^{(2)}$, where $N_{ID}^{(1)} \in \{0, \ldots, 355\}$, and $N_{ID}^{(2)} \in \{0,1,2\}$. 3GPP TS 38.211 stipulates that $N_{ID}^{(2)}$ carried in the PSS is mapped to cyclic shift values {0,43,86} of the m-sequence. Further, as shown in FIG. 3, one PSS occupies one OFDM and 127 subcarriers, and therefore a length of a sequence for generating the PSS is 127. The sequence for generating the PSS may be determined by using Formula (1).

$$d_{\text{PSS}}(n) = 1 - 2x(m) \qquad \qquad \text{Formula (1)}$$

$d_{\text{PSS}}(n)$ represents a value of an element in the sequence for generating the PSS, n may represent an index of an element in the sequence for generating the PSS, 0≤n<127, and $x(m)$ is used for determining $d_{\text{PSS}}(n)$. $m$ may be determined according to Formula (2), and $x(m)$ may be determined according to Formula (3) and Formula (4).

$$m = \left(n + 43N_{ID}^{(2)}\right) mod\,127 \qquad \qquad \text{Formula (2)}$$

$$x(i + 7) = \left(x(i + 4) + x(i)\right) mod\,2 \qquad \qquad \text{Formula (3)}$$

$$[x(6)\; x(5)\; x(4)\; x(3)\; x(2)\; x(1)\; x(0)] = [1\; 1\; 1\; 0\; 1\; 1\; 0] \qquad \qquad \text{Formula (4)}$$

It may be understood that $43N_{ID}^{(2)}$ is a preset cyclic shift with values of {0,43,86}. There are three values in total, and therefore there are also three values of $d_{\text{PSS}}(n)$. In other words, there are three different m-sequences in total for generating the PSS, and the three different m-sequences separately carry $N_{ID}^{(2)} \in \{0,1,2\}$. In addition, a PSS modulation scheme is similar to a binary phase shift keying (binary phase shift keying, BPSK) modulation scheme, and a PBCH modulation scheme is QPSK. For detailed content of SSB signal generation and resource mapping, refer to 3GPP TS 38.211. Details are not described herein.

For example, when receiving a PSS, the terminal device may obtain a PSS sequence through demodulation by using fast Fourier transformation (fast fourier transformation, FFT), generate three different m-sequences based on the foregoing preset cyclic shift, perform correlation detection (for example, a sequence inner product operation or bitwise multiplication) by using the three locally generated m-sequences and the PSS sequence obtained through demodulation, to obtain a correlation value, and determine, based on the correlation value, $N_{ID}^{(2)}$ carried in the PSS.

It should be understood that, for details of a sequence for generating the SSS, refer to 3GPP TS 38.211. Details are not described herein.

The following describes an SSB type.

7.1. Cell defining synchronization signal/physical broadcast channel block (cell defining SSB, CD-SSB) and non-cell defining synchronization signal/physical broadcast channel block (non-cell defining SSB, NCD-SSB)

The CD-SSB corresponds to one cell, and the cell has a unique NR cell global identifier (NR cell global identifier, NCGI). If an SSB is associated with remaining minimum system information (remaining minimum system information, RMSI), the SSB is a CD-SSB. The terminal device obtains corresponding RMSI based on a detected CD-SSB. If an SSB is not associated with RMSI, the SSB is an NCD-SSB.

7.2. SSB burst set

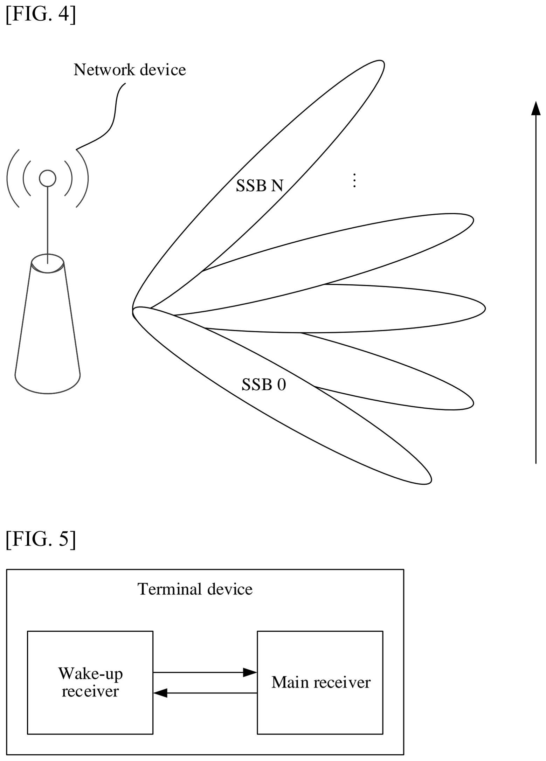

In the NR system, the network device may send an SSB through beam sweeping, that is, send a plurality of SSBs on different beams in a time division multiplexing manner. For example, as shown in FIG. 4, the network device may send an SSB #0 to an SSB #N on different beams. A plurality of SSBs sent through beam sweeping may be referred to as a synchronization signal (synchronization signal, SS) burst set (SS burst set). For example, the SSB #0 to the SSB #N in FIG. 4 may be referred to as one synchronization signal burst set.

A beam may be understood as a communication resource. A technology for forming the beam may be a beamforming technology or another technology means. Different beams may be considered as different resources.

The beam may be specifically represented in the protocol by using indexes of various signals (or resources), for example, represented by using a resource index of a channel state information reference signal (channel state information reference signal, CSI-RS), an SSB index, a resource index of a sounding reference signal (sounding reference signal, SRS), and a resource index of a tracking reference signal (tracking reference signal, TRS).

In addition, the beam may alternatively be embodied in the protocol as a spatial domain filter (spatial domain filter), a spatial filter (spatial filter), a spatial domain parameter (spatial domain parameter), a spatial parameter (spatial parameter), a spatial domain setting (spatial domain setting), a spatial setting (spatial setting), quasi co-location (quasi Co-location, QCL) information, a QCL assumption, a QCL indication, or the like. The beam may be indicated by using a transmission configuration indication (transmission configuration indication, TCI) state (TCI-state) parameter, or may be indicated by using a spatial relation (spatial relation) parameter. Therefore, in embodiments of this application, the beam may alternatively be replaced with a spatial domain filter, a spatial filter, a spatial domain parameter, a spatial parameter, a spatial domain setting, a spatial setting, QCL information, a QCL assumption, a QCL indication, a TCI-state, a spatial relation, or the like. The foregoing terms are also mutually equivalent. The beam in embodiments of this application may alternatively be replaced with another term for representing the beam. This is not limited in embodiments of this application.

In embodiments of this application, a beam used to send an SSB is referred to as an SSB beam. The SSB beam may be represented by using an SSB index, QCL information, a QCL assumption, a QCL indication, a TCI-state, a spatial relationship, or the like.

8. WUR and main receiver

With reference to the foregoing related descriptions of "PEI" and "DRX", the terminal device may turn off some hardware in the sleep state to reduce power consumption. Rel-18 proposes that two receivers may be used to implement that power consumption in the sleep state is lower than power consumption in the active state. As shown in FIG. 5, the terminal device may include a main receiver and a WUR. The WUR has a capability of monitoring a WUS in low power consumption, and the WUR may wake up the main receiver after receiving the WUS. The main receiver may be in an off state or a sleep state when the main receiver is not woken up, and may receive and/or send data after the main receiver is woken up.

In a possible implementation, the WUR may support ASK modulation and/or FSK modulation.

For ASK modulation, an amplitude of a carrier is adjusted based on a value of a digital signal (or referred to as a bit), and a frequency and a phase of the carrier remain unchanged, that is, information is transmitted based on a change of the amplitude of the carrier.

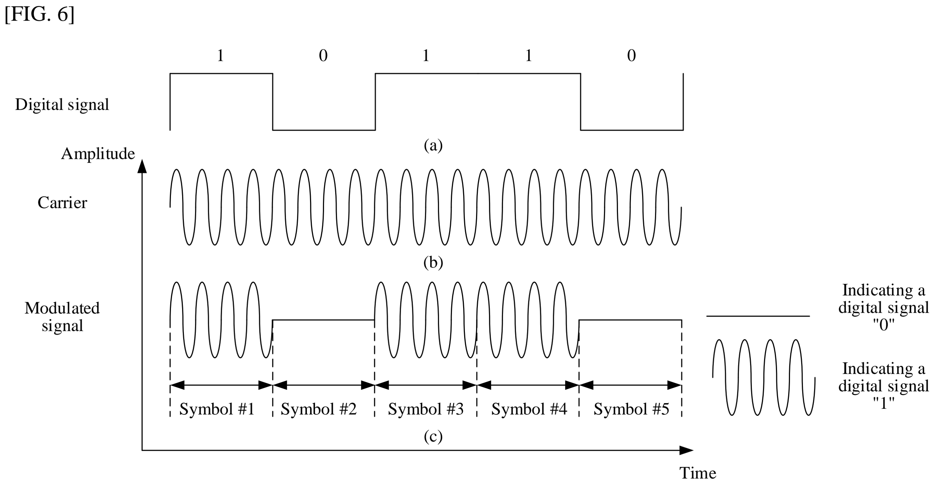

As shown in (a) in FIG. 6, a transmitted digital signal is a time domain sequence including "0" and "1". (b) in FIG. 6 shows a time domain waveform of a carrier, and (c) in FIG. 6 shows a time domain waveform of a modulated signal. As shown in (b) and (c) in FIG. 6, compared with the carrier, in the modulated signal, when the digital signal is "1", one amplitude signal is transmitted (the carrier amplitude remains unchanged), for example, a symbol #1, a symbol #3, and a symbol #4; and when the digital signal is "0", another amplitude signal is transmitted (the amplitude changes to 0), for example, a symbol #2 and a symbol #5. Apparently, in the ASK modulation scheme, 1-bit data is modulated into one symbol, there are two types of symbol waveforms corresponding to the modulated signal, and only two types of bits 1 and 0 can be transmitted. This binary ASK (2ASK) may also be referred to as on-off keying (on-off keying, OOK).

For FSK modulation, a frequency of a carrier is adjusted based on a value of a digital signal, and an amplitude and a phase of the carrier remain unchanged, that is, information is transmitted based on a change of the frequency of the carrier.

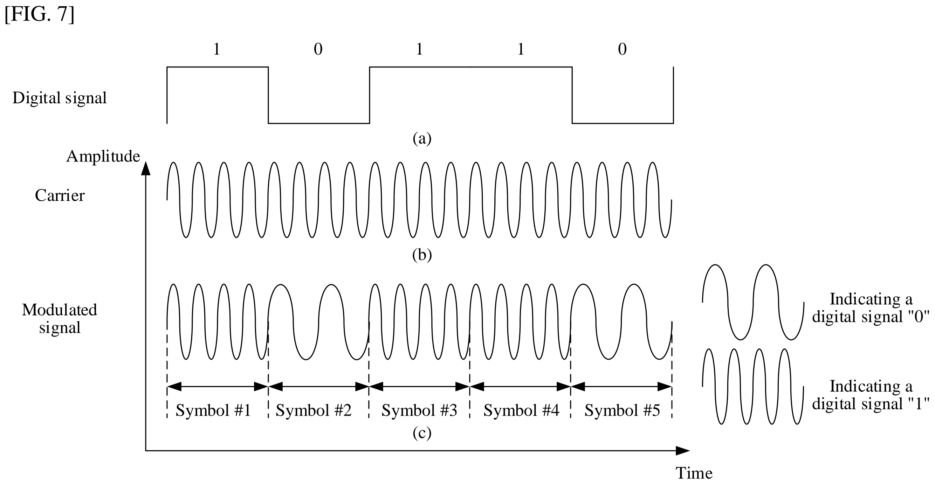

As shown in (a) in FIG. 7, a transmitted digital signal is a time domain sequence including "0" and "1". (b) in FIG. 7 shows a time domain waveform of a carrier, and (c) in FIG. 7 shows a time domain waveform of a modulated signal. As shown in (b) and (c) in FIG. 7, compared with the carrier, the modulated signal corresponds to a high frequency when the digital signal is "1", and corresponds to a low frequency when the digital signal is "0". In the FSK modulation scheme, 1-bit data is modulated into one symbol, a modulated signal corresponds to two types of symbol waveforms, and only two types of bits 1 and 0 can be transmitted. Therefore, this FSK modulation scheme is also referred to as binary frequency-shift keying (binary frequency-shift keying, BFSK). By analogy, when M-frequency modulation is used, data of $\log_2 M$ bits may be carried. In this case, the FSK modulation scheme may also be referred to as MFSK.

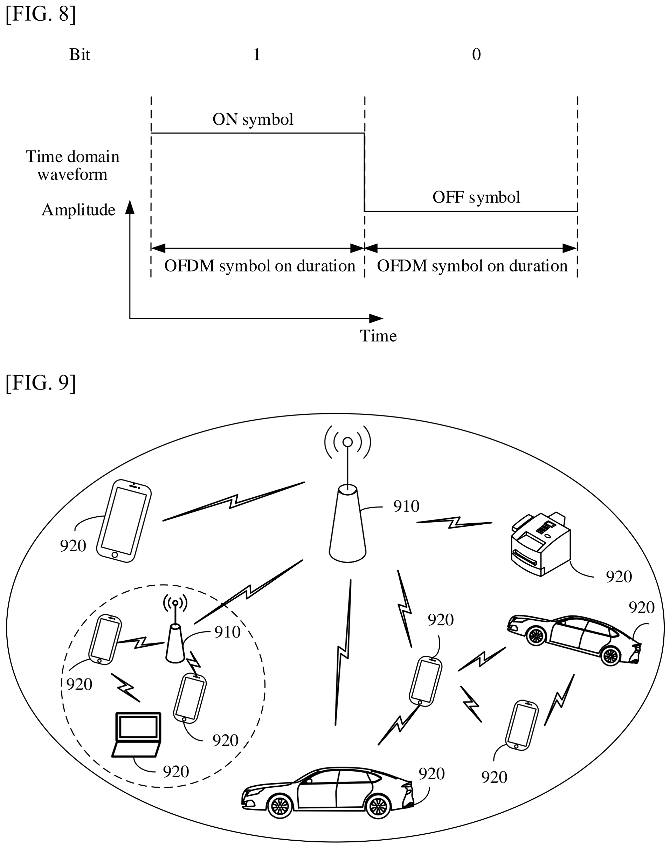

To reduce complexity of sending a WUS by the network device, an existing OFDM technology may be multiplexed to generate the foregoing OOK modulated signal and/or FSK modulated signal. An example of generating the OOK modulated signal by multiplexing the OFDM technology is described below with reference to FIG. 2 and FIG. 8.

As shown in FIG. 8, when a bit 1 needs to be transmitted, the frequency domain sequence $A=[a_0, a_1, ..., a_{n-1}]$ in FIG. 2 is a non-all-zero value. After OFDM processing, an OFDM symbol may be obtained in time domain, a waveform of the OFDM symbol has a relatively large amplitude value, and the OFDM symbol may be referred to as an ON symbol. When a bit 0 is transmitted, an amplitude of the frequency domain sequence $A=[a_0, a_1, ..., a_{n-1}]$ may be an all-zero value or a relatively small value. After OFDM processing, an OFF symbol may be obtained in time domain, and the OFF symbol has a relatively small amplitude value. Apparently, in this manner, one OFDM symbol can carry only one bit.

It may be understood that, in OOK modulation, a bit 1 may also be referred to as an ON element, and an OFDM symbol corresponding to the ON element is an ON symbol.

It should be understood that, when OOK modulation is used, each bit (the bit may be an encoded bit) corresponds to one symbol (which may also be referred to as one chip (chip)). When a bit is 1, a signal is sent in a length of the symbol, that is, signal power is not 0 in the length of the symbol. When a bit is 0, no signal is sent in a length of the symbol, that is, signal power is 0 in the length of the symbol.

It should be further understood that, when OOK modulation is used, when a bit is 0, a signal is sent in a length of the symbol, that is, signal power is not 0 in the length of the symbol; and when a bit is 1, no signal is sent in a length of the symbol, that is, signal power is 0 in the length of the symbol. This is not limited in this application.

It may be understood that, for OOK modulation, when receiving an OOK modulated signal, a first terminal device does not pay attention to a specific value of the frequency domain sequence $A=[a_0, a_1, ..., a_{n-1}]$, provided that the frequency domain sequence A is not an all-zero value, that is, signal power in the symbol is not 0, so that it can be determined whether a sent bit is 1 or 0.

A principle of generating the FSK modulated signal by multiplexing the OFDM technology is similar to the principle of generating the OOK modulated signal, and a difference lies in that a signal is sent in a symbol length corresponding to the bit 0 transmitted by using FSK, and from a frequency domain perspective, a low frequency corresponds to the bit 0 transmitted by using FSK, and a high frequency corresponds to the bit 1 transmitted by using FSK. For a specific implementation, refer to the OOK modulation scheme of multiplexing the OFDM technology. Details are not described herein.

The WUR usually receives the OOK modulated signal and/or the FSK modulated signal through envelope detection, that is, directly converts a received radio frequency signal into a baseband signal. However, the WUR can extract only amplitude information, but cannot extract phase information of the signal. Consequently, sensitivity of receiving a WUS is reduced.

Based on this, an embodiment of this application provides a signal transmission method, to improve sensitivity of WUS reception.

The following describes the technical solutions in embodiments of this application with reference to the accompanying drawings in embodiments of this application.

For ease of understanding of embodiments of this application, the following descriptions are provided before embodiments of this application are described.


1. WUR


The WUR in embodiments of this application may have a signal receiving capability. The WUR may support one or more of the following capabilities: OOK modulation, FSK modulation, or a signal generated based on a complex sequence. The complex sequence may include a real number and/or an imaginary number. For example, the complex sequence may be [1, -1, -1, 1, -1], [1, 0, -1, -1, 0], or [1+j, 2-j, 1+4j, 0, -1].

In a possible implementation, the complex sequence may include one or more of the following sequences: a Zadoff-Chu sequence, an m-sequence, or a gold sequence. For the Zadoff-Chu sequence, the m-sequence, or the gold sequence, refer to the related 3GPP standard protocol. Details are not described herein. For example, the signal generated based on the complex sequence may include a PSS, an SSS, or a PBCH DMRS.

It should be understood that, that the WUR supports OOK modulation may mean that the WUR supports receiving of an OOK modulated signal, or may mean that the WUR supports processing of an OOK modulated signal, to obtain information carried in the signal. Similarly, that the WUR supports FSK modulation may mean that the WUR supports receiving or processing of an FSK modulated signal, to obtain information carried in the signal; and that the WUR supports a signal generated based on a complex sequence may mean that the WUR supports receiving and processing of the signal generated based on the complex sequence, to obtain information carried in the signal.

In addition, the WUR may receive or process, through correlation detection, the signal generated based on the complex sequence. Correlation detection may mean that a terminal device may generate the complex sequence of the signal, and perform a correlation operation (for example, a sequence inner product operation or bitwise multiplication and summation) on the signal based on the generated complex sequence.

In a possible implementation, the WUR may further have a signal sending capability.

In a possible implementation, the WUR may be a receiver that receives or processes a signal through envelope detection.

In a possible implementation, the WUR may be a receiver that does not perform fast Fourier transformation (fast fourier transformation, FFT) and/or inverse fast Fourier transformation (inverse fast fourier transformation, IFFT) processing.

It may be understood that the WUR is merely an example name for ease of description in embodiments, and may alternatively be replaced with any possible name, for example, "wake-up receiver unit", "low power wake-up receiver", "wake-up radio", "secondary receiver", or "auxiliary receiver". This is not specifically limited.

2. Main receiver

In embodiments of this application, the main receiver may listen to the DCI of the preset type on the foregoing PDCCH, and receive a signal such as an SSB, a TRS, a PDSCH, or a CSI-RS. The main receiver may further support OOK modulation, FSK modulation, BPSK modulation, quadrature phase shift keying (quadrature phase shift keying, QPSK) modulation, 16 quadrature amplitude modulation (quadrature amplitude modulation, QAM), 64QAM, 256QAM, or the like.

It may be understood that the main receiver may send an OOK modulated signal, an FSK modulated signal, a BPSK modulated signal, a QPSK modulated signal, a 16QAM signal, a 64QAM signal, a 256QAM signal, or the like.

In a possible implementation, the main receiver may alternatively be a receiver that generates an FFT signal and/or an IFFT signal.

In a possible implementation, precision of a local oscillator of the main receiver is higher than precision of a local oscillator of the WUR.

In a possible implementation, power consumption of the main receiver for receiving or processing a signal is greater than power consumption of the WUR for receiving or processing a signal.

In a possible implementation, power consumption of the main receiver for sending a signal is greater than power consumption of the WUR for receiving or processing a signal.

In a possible implementation, standby power consumption of the main receiver is greater than standby power consumption of the WUR.

3. In embodiments of this application, for ease of description, when numbering is involved, numbering may be performed consecutively starting from 1, or may be performed consecutively starting from 0, or may be performed starting from any parameter. It should be understood that the foregoing descriptions are all settings for ease of describing the technical solutions provided in embodiments of this application, but are not intended to limit the scope of embodiments of this application.

4. "Predefinition" or "preconfiguration" may be implemented by pre-storing, in a device (for example, including a terminal device and/or a network device), corresponding code, a table, or another manner that may indicate related information. A specific implementation is not limited in embodiments of this application. Herein, "store" may mean storing in one or more memories. The one or more memories may be separately disposed, or may be integrated into an encoder, a decoder, a processor, or a communication apparatus. Alternatively, some of the one or more memories may be separately disposed, and some of the one or more memories are integrated into a decoder, a processor, or a communication apparatus. A type of the memory may be a storage medium in any form. This is not limited in embodiments of this application.

5. In embodiments of this application, "protocol" may be a standard protocol in the communication field, for example, may include a long term evolution (long term evolution, LTE) protocol, an NR protocol, and a related protocol applied to a future communication system. This is not limited in embodiments of this application.

6. In embodiments of this application, descriptions such as "when...", "in a case of...", and "if" all mean that a device (for example, a terminal device or a network device) performs corresponding processing in an objective case, but do not constitute a limitation on time, do not require the device (for example, the terminal device or the network device) to perform a determining action during implementation, and do not mean other limitations either.

7. In descriptions of embodiments of this application, unless otherwise specified, "/" indicates that associated objects are in an "or" relationship. For example, A/B may represent A or B. In embodiments of this application, "and/or" merely describes an association relationship between associated objects and indicates that three relationships may exist. For example, A and/or B may represent three cases: Only A exists, both A and B exist, and only B exists, where A and B may be singular or plural. In addition, in the descriptions of embodiments of this application, unless otherwise specified, "a plurality of" means two or more. In addition, "at least one of the following items (pieces)" or a similar expression thereof means any combination of these items, including any combination of singular items (pieces) or plural items (pieces). For example, at least one item (piece) of a, b, or c may indicate a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, a word such as "example" or "for example" indicates an example, an instance, or descriptions. Any embodiment or design solution described as an "example" or "for example" in embodiments of this application should not be explained as being more preferred or having more advantages than another embodiment or design solution. Exactly, use of the word such as "example" or "for example" is intended to present a related concept in a specific manner for ease of understanding.

Embodiments of this application are applicable to a long term evolution (long term evolution, LTE) system, an NR system (which may also be referred to as a fifth generation (5th generation, 5G) system), a vehicle to everything (vehicle to everything, V2X) system, an LTE-NR hybrid networking system, a device-to-device (device-to-device, D2D) system, a machine to machine (machine to machine, M2M) communication system, an internet of things (internet of things, IoT) system (for example, a narrowband internet of things (narrowband internet of things, NB-IoT) system), and another next-generation communication system. Alternatively, the communication system may be a non-3GPP communication system. This is not limited.

In addition, a communication architecture and a service scenario described in embodiments of this application are intended to describe the technical solutions in embodiments of this application more clearly, and do not constitute a limitation on the technical solutions provided in embodiments of this application. A person of ordinary skill in the art may learn that, with the evolution of the communication architecture and the emergence of new service scenarios, the technical solutions provided in embodiments of this application are also applicable to similar technical problems.

FIG. 9 is a diagram of a structure of a communication system according to an embodiment of this application. In FIG. 9, an example in which the communication system includes at least one network device 910 and a first terminal device 920 connected to the network device 910 is used for description. It should be understood that the communication system further includes a second terminal device. The first terminal device and the second terminal device have different capabilities. A WUR of the first terminal device supports receiving of a signal generated based on a complex sequence, and a WUR of the second terminal device supports receiving of an OOK modulated signal and/or an FSK modulated signal, but does not support receiving of a signal generated based on a complex sequence.

It should be understood that a quantity of first terminal devices 920 and a quantity of network devices 910 in FIG. 9 are merely examples. There may be more or fewer first terminal devices and more or fewer network devices.

In a possible implementation, the network device generates a first signal based on a first sequence, and generates a first synchronization signal based on a second sequence. Further, the network device sends the first signal and the first synchronization signal to the first terminal device. The first sequence is a complex sequence, and the first signal indicates the first terminal device to enter a first state. The second sequence is a first synchronization sequence or a second synchronization sequence, the first synchronization sequence is a complex sequence, the second synchronization sequence is a binary sequence, and the first synchronization signal is for time and/or frequency synchronization.

Specific implementations of the foregoing solutions are described in detail in the following embodiments. Details are not described herein.

In this embodiment of this application, the network device sends the first synchronization signal and the first signal to the first terminal device. Therefore, the first terminal device may obtain time and/or frequency synchronization by using the first synchronization signal, so as to determine a start moment of an OFDM symbol, duration of the OFDM symbol, a frequency domain range, or the like, so that the first terminal device can better determine time domain and/or frequency domain information for receiving the first signal. Further, because the first signal is generated based on the complex sequence, the first terminal device may receive the first signal through correlation detection, so that not only amplitude information can be obtained, but also phase information can be retained, thereby improving receiver sensitivity of receiving a second signal.

In a possible implementation, the terminal device (for example, the first terminal device and/or the second terminal device) in embodiments of this application may be a device configured to implement a wireless communication function, for example, a terminal or a chip that may be used in the terminal. The terminal may be user equipment (user equipment, UE), an access terminal, a terminal unit, a terminal station, a mobile station, a mobile console, a remote station, a remote terminal, a mobile device, a wireless communication device, a terminal agent, a terminal apparatus, or the like in a 5G network or a future evolved public land mobile network (public land mobile network, PLMN). The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device , a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical (remote medical), a wireless terminal in smart grid (smart grid), a wireless terminal in transportation safety (transportation safety), a wireless terminal in smart city (smart city), a wireless terminal in smart home (smart home), or the like. In a possible implementation, the terminal device may be mobile or fixed.

With reference to the structure of the terminal device in FIG. 5 and the foregoing related descriptions of the "main receiver" and the "WUR", in this embodiment of this application, a WUR and a main receiver of the terminal device may be two functional modules of the terminal device, or may be two entities of the terminal device. In hardware implementation, the WUR and the main receiver of the terminal device may share one set of hardware resources, or may share some hardware resources, or may be implemented by using two sets of independent hardware resources. This is not specifically limited in embodiments of this application.

In a possible implementation, the network device in embodiments of this application may be a device that communicates with the terminal device (for example, the first terminal device and/or the second terminal device). The network device may include a transmission reception point (transmission reception point, TRP), a base station, a remote radio unit (remote radio unit, RRU) or a baseband unit (baseband unit, BBU) (which may also be referred to as a digital unit (digital unit, DU)) of a split base station, a broadband network gateway (broadband network gateway, BNG), an aggregation switch, a non-3GPP access device, a relay station, an access point, or the like. In FIG. 9, an example in which the network device 910 is a base station is used for description. A general description is provided herein, and details are not described below again. In addition, the base station in embodiments of this application may be a base transceiver station (base transceiver station, BTS) in a global system for mobile communications (global system for mobile communications, GSM) or code division multiple access (code division multiple access, CDMA) network, an NB (NodeB) in wideband code division multiple access (wideband code division multiple access, WCDMA), an eNB or eNodeB (evolved NodeB) in LTE, a radio controller in a cloud radio access network (cloud radio access network, CRAN) scenario, a base station in a 5G communication system (for example, a next-generation NodeB (gNodeB, gNB)), a base station in a future evolved network, or the like. This is not specifically limited herein.

In a possible implementation, in some deployments, the gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service and implementing functions of an RRC layer and a packet data convergence protocol (packet data convergence protocol, PDCP) layer. The DU is responsible for processing a physical layer protocol and a real-time service and implementing functions of a radio link control (radio link control, RLC) layer, a MAC layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a CN. This is not limited in embodiments of this application.

In a possible implementation, in embodiments of this application, a plurality of antennas may be configured for both the network device and the terminal device, to support a massive multiple-input multiple-output (massive multiple-input multiple-output, Massive-MIMO) technology. Further, the network device and the terminal device may support both a single-user MIMO (single-user MIMO, SU-MIMO) technology and a multi-user MIMO (multi-user MIMO, MU-MIMO) technology. The MU-MIMO technology may be implemented based on a space division multiple access (space division multiple access, SDMA) technology. Because the plurality of antennas are configured, the network device and the terminal device may further flexibly support a single-input single-output (Single-Input Single-Output, SISO) technology, a single-input multiple-output (Single-Input multiple-Output, SIMO) technology, and a multiple-input single-output (multiple-input single-output, MISO) technology, to implement various diversity (for example, but not limited to, transmit diversity and receive diversity) and multiplexing technologies. The diversity technology may include but is not limited to a transmit diversity (transmit diversity, TD) technology and a receive diversity (receive diversity, RD) technology, and the multiplexing technology may be a spatial multiplexing (spatial multiplexing) technology.

In a possible implementation, the network device and the terminal device (for example, the first terminal device or the second terminal device) in embodiments of this application may also be referred to as communication apparatuses, and may be a general-purpose device or a special-purpose device. This is not specifically limited in embodiments of this application.

In a possible implementation, a related function of the terminal device (for example, the first terminal device or the second terminal device) or the network device in embodiments of this application may be implemented by one device, or may be jointly implemented by a plurality of devices, or may be implemented by one or more functional modules in one device. This is not specifically limited in embodiments of this application. It may be understood that the foregoing functions may be network elements in a hardware device, software functions running on dedicated hardware, a combination of hardware and software, or virtualized functions instantiated on a platform (for example, a cloud platform).

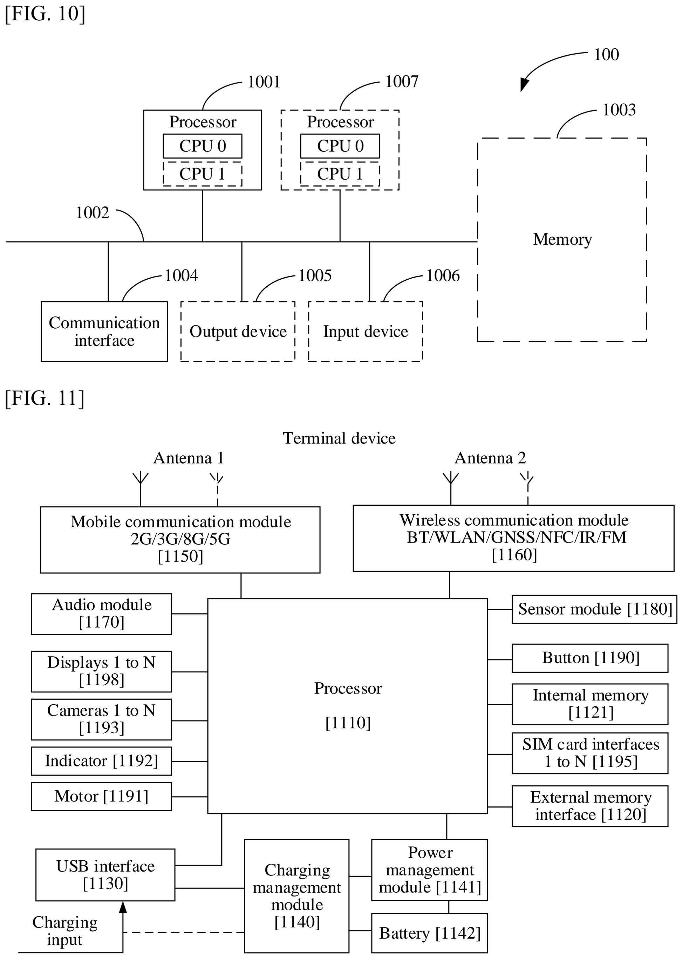

For example, a related function of the terminal device (for example, the first terminal device or the second terminal device) or the network device in embodiments of this application may be implemented by using a communication apparatus 100 in FIG. 10. FIG. 10 is a diagram of a structure of the communication apparatus 100 according to an embodiment of this application. The communication apparatus 100 includes one or more processors 1001, a communication line 1002, and at least one communication interface (a communication interface 1004 and one processor 1001 are merely used as an example in FIG. 10 for description), and may further include a memory 1003.

The processor 1001 may be a general-purpose central processing unit (central processing unit, CPU), a microprocessor, an application-specific integrated circuit (application-specific integrated circuit, ASIC), or one or more integrated circuits configured to control program execution of the solutions in this application.

The communication line 1002 may include a path for connecting different components.

The communication interface 1004 may be a transceiver module configured to communicate with another device or communication network, for example, the Ethernet, a RAN, or a wireless local area network (wireless local area network, WLAN). For example, the transceiver module may be an apparatus such as a transceiver or a transceiver machine. Further, the transceiver module may include the WUR of the terminal device and the main receiver of the terminal device in FIG. 5. In a possible implementation, the communication interface 1004 may alternatively be a transceiver circuit in the processor 1001, and is configured to implement signal input and signal output of the processor.

The memory 1003 may be an apparatus having a storage function. For example, the memory may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compressed optical disc, a laser disc, an optical disc, a digital versatile disc, a Blu-ray disc, or the like), a magnetic disk storage medium or another magnetic storage device, or any other medium that can be used to carry or store expected program code in a form of an instruction or a data structure and that can be accessed by a computer. However, this is not limited thereto. The memory may exist independently and is connected to the processor through the communication line 1002. The memory may alternatively be integrated with the processor.

The memory 1003 is configured to store computer-executable instructions for executing the solutions of this application, and the processor 1001 controls the execution. The processor 1001 is configured to execute the computer-executable instructions stored in the memory 1003, to implement signal transmission methods provided in embodiments of this application.

Alternatively, in embodiments of this application, the processor 1001 may implement a processing-related function in the signal transmission methods provided in the following embodiments of this application, and the communication interface 1004 is responsible for communicating with another device or a communication network. This is not specifically limited in embodiments of this application.

In a possible implementation, the memory 1003 in embodiments of this application may be further configured to store information or a parameter described in the following embodiments, for example, capability information, time and/or frequency information, a first sequence, or a second sequence.

The computer-executable instructions in embodiments of this application may also be referred to as application program code. This is not specifically limited in embodiments of this application.

During specific implementation, in an embodiment, the processor 1001 may include one or more CPUs, for example, a CPU 0 and a CPU 1 in FIG. 10.

During specific implementation, in an embodiment, the communication apparatus 100 may include a plurality of processors, for example, the processor 1001 and a processor 1007 in FIG. 10. Each of the processors may be a single-core (single-CPU) processor, or may be a multi-core (multi-CPU) processor. The processor herein may be one or more devices, circuits, and/or processing cores configured to process data (for example, computer program instructions).

During specific implementation, in an embodiment, the communication apparatus 100 may further include an output device 1005 and an input device 1006. The output device 1005 communicates with the processor 1001, and may display information in a plurality of manners.

The communication apparatus 100 may be a general-purpose apparatus or a special-purpose apparatus. For example, the communication apparatus 100 may be a desktop computer, a portable computer, a network server, a palmtop computer (personal digital assistant, PDA), a mobile phone, a tablet computer, a wireless terminal device, an embedded device, or a device having a structure similar to that in FIG. 10. A type of the communication apparatus 100 is not limited in embodiments of this application.

With reference to the diagram of the structure of the communication apparatus 100 shown in FIG. 10, an example in which the communication apparatus 100 is the first terminal device 920 in FIG. 9 is used. For example, FIG. 11 shows a form of a specific structure of a terminal device according to an embodiment of this application.

In some embodiments, a function of the processor 1001 in FIG. 10 may be implemented by using a processor 1110 in FIG. 11.

In some embodiments, a function of the communication interface 1004 in FIG. 10 may be implemented by using an antenna 1, an antenna 2, a mobile communication module 1150, a wireless communication module 1160, and the like in FIG. 11.

The antenna 1 and the antenna 2 are configured to transmit and receive electromagnetic wave signals. Each antenna in the terminal device may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 1150 may provide a solution that is applied to the terminal device and that includes wireless communication such as 2G/3G/4G/5G. The mobile communication module 1150 may include at least one filter, a switch, a power amplifier, a low noise amplifier (low noise amplifier, LNA), and the like. The mobile communication module 1150 may receive an electromagnetic wave through the antenna 1, perform processing such as filtering or amplification on the received electromagnetic wave, and transmit a processed electromagnetic wave to the modem processor for demodulation. The mobile communication module 1150 may further amplify a signal modulated by the modem processor, and convert an amplified signal into an electromagnetic wave for radiation through the antenna 1. In some embodiments, at least some functional modules of the mobile communication module 1150 may be disposed in the processor 1110. In some embodiments, at least some functional modules of the mobile communication module 1150 may be disposed in a same component as at least some modules of the processor 1110.

The wireless communication module 1160 may be one or more components integrating at least one communication processing module. The wireless communication module 1160 receives an electromagnetic wave through the antenna 2, performs frequency modulation and filtering processing on the electromagnetic wave signal, and sends a processed signal to the processor 1110. The wireless communication module 1160 may further receive a to-be-sent signal from the processor 1110, perform frequency modulation and amplification on the signal, and convert a processed signal into an electromagnetic wave for radiation through the antenna 2.

In some embodiments, in the terminal device, the antenna 1 and the mobile communication module 1150 are coupled, and the antenna 2 and the wireless communication module 1160 are coupled, so that the terminal device can communicate with a network and another device by using a wireless communication technology.

In some embodiments, a function of the memory 1003 in FIG. 10 may be implemented by using an internal memory 1121, an external memory (such as a Micro SD card) connected through an external memory interface 1120 in FIG. 11, or the like.

In some embodiments, a function of the output device 1005 in FIG. 10 may be implemented by using a display 1194 in FIG. 11. The display 1194 includes a display panel.

In some embodiments, a function of the input device 1006 in FIG. 10 may be implemented by using a mouse, a keyboard, a touchscreen device, or a sensor module 1180 in FIG. 11. In some embodiments, as shown in FIG. 11, the terminal device may further include one or more of an audio module 1170, a camera 1193, an indicator 1192, a motor 1191, a button 1190, a SIM card interface 1195, a USB interface 1130, a charging management module 1140, a power management module 1141, and a battery 1142. This is not specifically limited in embodiments of this application.

It may be understood that the structure shown in FIG. 11 does not constitute a specific limitation on the terminal device. For example, in some other embodiments of this application, the terminal device may include more or fewer components than those shown in the figure, or some components may be combined, or some components may be split, or the components may be differently arranged. The components shown in the figure may be implemented by using hardware, software, or a combination of software and hardware.

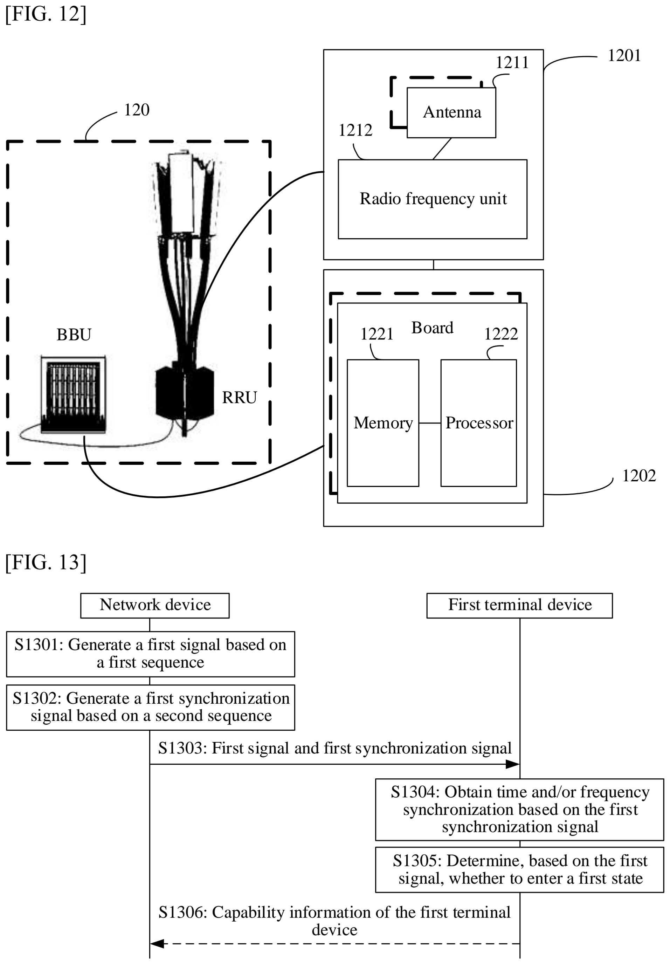

Alternatively, with reference to the diagram of the structure of the communication apparatus 100 shown in FIG. 10, an example in which the communication apparatus 100 is the network device 910 in FIG. 9 and the network device 910 is a base station is used. For example, FIG. 12 shows a form of a specific structure of a base station 120 according to an embodiment of this application.

The base station 120 includes one or more radio frequency units (for example, an RRU 1201) and one or more BBUs 1202.

The RRU 1201 may be referred to as a transceiver unit, a transceiver machine, a transceiver circuit, a transceiver, or the like, and may include at least one antenna feeder system (that is, antenna) 1211 and a radio frequency unit 1212. The RRU 1201 is mainly configured to send and receive radio frequency signals and perform conversion between a radio frequency signal and a baseband signal. In some embodiments, a function of the communication interface 1004 in FIG. 10 may be implemented by using the RRU 1201 in FIG. 12.

The BBU 1202 is a control center of the network device, may also be referred to as a processing unit, and is mainly configured to complete baseband processing functions such as channel coding, multiplexing, modulation, and spectrum spreading.

In some embodiments, the BBU 1202 may include one or more boards. A plurality of boards may jointly support a radio access network (such as an LTE network) of a single access standard, or may separately support radio access networks (such as an LTE network, a 5G network, or another network) of different access standards. The BBU 1202 further includes a memory 1221 and a processor 1222. The memory 1221 is configured to store necessary instructions and data. The processor 1222 is configured to control the network device to perform a necessary action. The memory 1221 and the processor 1222 may serve one or more boards. In other words, a memory and a processor may be disposed on each board. Alternatively, a plurality of boards may share a same memory and a same processor. In addition, a necessary circuit may be further disposed on each board. In some embodiments, a function of the processor 1001 in FIG. 10 may be implemented by using the processor 1222 in FIG. 12, and a function of the memory 1203 in FIG. 12 may be implemented by using the memory 1221 in FIG. 12.

In a possible implementation, the RRU 1201 and the BBU 1202 in FIG. 12 may be physically disposed together, or may be physically separated, for example, a distributed base station. This is not specifically limited in embodiments of this application.

With reference to FIG. 13, the following describes signal transmission methods provided in embodiments of this application.

It should be understood that, in the following embodiments of this application, a name of a signal between devices or a name or the like of each parameter in the signal is merely an example, and may alternatively be another name in a specific implementation. This is not specifically limited in embodiments of this application.

An example in which the network device interacts with the first terminal device in FIG. 9 is used. FIG. 13 shows a signal transmission method according to an embodiment of this application. The method includes the following steps.

S1301: The network device generates a first signal based on a first sequence, where the first sequence is a complex sequence, and the first signal indicates the first terminal device whether to enter a first state.

S1302: The network device generates a first synchronization signal based on a second sequence, where the first synchronization signal is for time and/or frequency synchronization, the second sequence is a first synchronization sequence or a second synchronization sequence, the first synchronization sequence may be a complex sequence, and the second synchronization sequence may be a binary sequence.

It should be understood that step S1301 may be performed before step S1302, or step S1301 may be performed after step S1302, or step S1301 and step S1302 may be simultaneously performed. This is not specifically limited in this embodiment of this application.

S1303: The network device sends the first signal and the first synchronization signal to the first terminal device. Correspondingly, the first terminal device receives the first signal and the first synchronization signal from the network device.

S1304: The first terminal obtains time and/or frequency synchronization based on the first synchronization signal.

S1305: The first terminal device determines, based on the first signal, whether to enter the first state.

The following describes steps S1301 to S1305 in detail.

For S1301:

It should be understood that, in this embodiment of this application, a plurality of elements included in a complex sequence may be all real numbers; or a plurality of elements included in a complex sequence may be all imaginary numbers; or a complex sequence includes a real number and/or an imaginary number.

For example, if a plurality of elements included in a complex sequence are all real numbers, the first sequence may include an m-sequence and/or a gold sequence.

For another example, if a plurality of elements included in a complex sequence are all imaginary numbers, the first sequence may include a Zadoff-Chu sequence.

For still another example, if a complex sequence includes a real number and/or an imaginary number, the first sequence may include a gold sequence and a Zadoff-Chu sequence.

It may be understood that "complex sequence" in this embodiment of this application may be replaced with "m-sequence", "gold sequence", "Zadoff-Chu sequence", or the like. In other words, the first sequence is an m-sequence, a gold sequence, a Zadoff-Chu sequence, or the like.

In a possible implementation, each element in the first sequence may be represented by a+bj, where $j^2=-1$, and a and b are real numbers.

In a possible implementation, the first sequence may be a frequency domain sequence used for mapping to a subcarrier. The first sequence may occupy one or more OFDM symbols. Each element in the first sequence is mapped to one subcarrier; or each element in the first sequence occupies one subcarrier.

In a possible implementation, the first sequence may be a modulated sequence. The first sequence may be a sequence obtained after BPSK modulation, phase-shift keying (phase-shift keying, PSK) modulation, or QAM modulation.

For example, the first sequence may be a sequence obtained after BPSK modulation is performed on an m-sequence. The elements in the first sequence include "1" and "-1".

For another example, the first sequence may include k constellation points. The constellation point may be a PSK constellation point or a QAM constellation point. A modulation order of PSK or QAM is not specifically limited.

It may be understood that the foregoing constellation point may be a modulated symbol corresponding to a constellation point.

In a possible implementation, the first sequence may be pre-stored on the first device; or the first sequence may be agreed on in a protocol; or the first sequence may be negotiated by the network device and the first terminal device; or the first sequence may be configured by the network device for the first terminal device. This is not specifically limited in this embodiment of this application.

It should be understood that the first terminal device may generate a part or all of the first sequence, and perform correlation detection on the first signal based on the part or all of the first sequence. For a specific implementation of correlation detection, refer to the related descriptions of the foregoing "SSB". Details are not described herein again.

It may be understood that, for a specific implementation in which the network device generates the first signal based on the first sequence, refer to the related descriptions of the foregoing "OFDM technology". Details are not described herein again.

In conclusion, because the first signal is a signal generated based on a complex sequence, a WUR may receive the first signal through correlation detection, that is, the WUR may extract amplitude information and phase information of the signal, thereby improving receiver sensitivity of receiving the first signal by the WUR. Further, improving receiver sensitivity of receiving the first signal by the WUR can improve an anti-interference capability of the WUR and improve coverage performance.

In this embodiment of this application, the first signal may be a signal monitored by the WUR, and the first signal may also be referred to as a "WUS", a "signal transmitted on a wake-up link", a "WUR signal", or the like. This is not specifically limited in this embodiment of this application.

In a possible implementation, in the first state, the first terminal device communicates with the network device by using a main receiver.

In a possible implementation, the first state may be a state existing after the main receiver is woken up. The state existing after the main receiver is woken up may mean that the first terminal device may receive a downlink signal from the network device and send an uplink signal to the network device by using the main receiver; or the state existing after the main receiver is woken up may mean that the main receiver enters (or switches to) an on state from an off state; or the state existing after the main receiver is woken up may mean that the main receiver enters a high power consumption state from a low power consumption state; or the state existing after the main receiver is woken up may mean that the first terminal device enters a state in which the first terminal device can receive a signal of a preset type from a state in which the first terminal device cannot receive the signal of the preset type.

The signal of the preset type may be a signal that the WUR of the first terminal device cannot receive or does not process.

For example, when the first terminal device is in an idle state or an inactive state, the signal of the preset type may be DCI that is scrambled by using a P-RNTI and that is carried on a PDCCH in a PO. When the first terminal device is in a connected state, the signal of the preset type may be the DCI of the preset type that is carried on the foregoing PDCCH in the foregoing "DRX".

For specific descriptions of the signal of the preset type, refer to the foregoing descriptions of the "main receiver". Details are not described herein again.

It may be understood that the first state may correspond to different RRC connected states. The first state may correspond to the RRC connected state, the RRC idle state, the RRC inactive state, or may correspond to a first RRC state. The first RRC state is neither the RRC connected state, nor the RRC idle state, nor the RRC inactive state. When the first terminal device is in the first RRC state, the WUR of the first terminal device may be in an on state. For example, the first state may correspond to a state, in the RRC idle state or the RRC inactive state, of listening to the DCI scrambled by using the P-RNTI. For another example, the first state may correspond to a state, in the RRC connected state, of listening to the DCI of the preset type. For another example, the first state may correspond to the first RRC state. When the first terminal device is in the first RRC state, the WUR of the first terminal device may be in the on state.

In another possible implementation, on a time domain resource other than on duration in a PO or a DRX cycle, the first state may mean that the main receiver is in a state in which the main receiver neither sends a downlink signal nor receives an uplink signal, or the main receiver is in an off state, or the main receiver is in a low power consumption state, or the like. This is not specifically limited in this embodiment of this application.

In still another possible implementation, on a time domain resource other than on duration in a PO or a DRX cycle, the first state may mean that the WUR of the first terminal device may be in an on state, or the WUR of the first terminal device is in a state in which the WUR can receive the first synchronization signal and the first signal.

It should be understood that, before the first terminal device receives the first signal, the first terminal device may already be in the first state.

In a possible implementation, the first signal indicates the first terminal device whether to enter the first state from a second state. In the second state, the first terminal device receives information from the network device by using the WUR. Alternatively, the first state may be a state existing before the main receiver is woken up. The state existing before the main receiver is woken up may mean that the first terminal device may receive a downlink signal from the network device and send an uplink signal to the network device by using the WUR; or the state existing before the main receiver is woken up may mean that the main receiver is in an off state; or the state existing before the main receiver is woken up may mean that the main receiver is in a low power consumption state; or the state existing before the main receiver is woken up may mean that the first terminal device is in a state in which the first terminal device can receive a signal of a preset type.

In a possible implementation, that the first signal indicates the first terminal device whether to enter the first state is specifically that the network device indicates, by sending the first signal, the first terminal device to enter the first state. Correspondingly, the first terminal device receives the first signal from the network device in the second state, and enters the first state. If the first terminal device does not receive the first signal from the network device, the first terminal device does not enter the first state.

In the first state, the first terminal device communicates with the network device by using the main receiver. In the second state, the first terminal device communicates with the network device by using the WUR.

It may be understood that the first terminal device may not operate in a DRX mode. For example, when the network device does not configure a DRX parameter for the first terminal device, the WUR of the first terminal device may be in the on state, and the main receiver of the first terminal device is in the off state, and does not receive paging information and data. When a network side has a paging, service data, or signaling transmission requirement, the network device may send the first signal to the first terminal device. In this way, the WUR of the first terminal device may receive the first signal, and wake up the main receiver of the first terminal device, to receive the paging information and the data.

When the first terminal device operates in the DRX mode, for example, when the first terminal device receives the first signal before the on duration or the PO, the first terminal device may wake up the main receiver, to enter the first state in the PO or the on duration, to receive the paging information and the data.

In another possible implementation, that the first signal indicates the first terminal device whether to enter the first state is specifically that the network device indicates, by sending the first signal, the first terminal device not to enter the first state. Correspondingly, the first terminal device receives the first signal from the network device by using the WUR, and does not enter the first state. If the first terminal device does not receive the first signal from the network device, the first terminal device enters the first state.

In the first state, the first terminal device communicates with the network device by using the main receiver. In the second state, the first terminal device communicates with the network device by using the WUR.

It may be understood that the first terminal device may operate in the DRX mode, and when there is no paging, service data, or signaling transmission requirement, the network device may send the first signal to the first terminal device. In this way, when receiving the first signal, the first terminal device does not wake up the main receiver of the first terminal device, to reduce power consumption.

In conclusion, the first synchronization signal may indicate, based on whether the first synchronization signal exists, the first terminal device whether to enter the first state.

In still another possible implementation, the first signal carries indication information indicating whether to enter the first state. The indication information indicating whether to enter the first state may include the information indicated by the foregoing PEI, the information indicated by the foregoing C-DRX WUS, or a target identifier. For the information indicated by the PEI and the information indicated by the C-DRX WUS, refer to the foregoing related descriptions. Details are not described herein again.

In a possible implementation, the target identifier may be a first terminal device identifier, a first terminal device group identifier, a cell identifier, a tracking area identifier, or a RAN area identifier. The first terminal device identifier may be a 5G globally unique temporary identity (5G globally unique temporary UE identity, 5G-GUTI). The 5G-GUTI includes a globally unique access and mobility management function (access and mobility management function, AMF) identifier (globally unique AMF identifier, GUAMI) and a 5G temporary mobile subscriber identity (5G temporary mobile subscriber identity, 5G-TMSI). The GUAMI indicates an identifier of an AMF that provides a service for the first terminal device. Alternatively, the first terminal device identifier may be a 5G-S-TMSI, and the 5G-S-TMSI is a shortened form of 5G-GUTI. The 5G-STMSI includes an AMF set identifier (AMF set ID), an AMF pointer (AMF pointer), and a 5G-TMSI.

The first terminal device group identifier may be a service identifier allocated by a CN device based on a service (service), and first terminal devices of a same service are allocated to a same group. Alternatively, the first terminal device group identifier may be a session identifier allocated by a CN device based on a session (session), and first terminal devices that use a same session are allocated to a same group. Alternatively, the first terminal device group identifier may be a group identifier allocated by a CN device based on a paging probability of the first terminal device, and first terminal devices in a same paging probability range are allocated to a same group. In other words, the paging probability range indicates that a probability that the first terminal device is paged is within the range.

It may be understood that, for details of the cell identifier, the tracking area identifier, or the RAN area identifier, refer to the related 3GPP standard protocol. Details are not described herein.

In a possible implementation, if the indication information carried in the first signal received by the first terminal device includes the first terminal device identifier corresponding to the first terminal device, the first terminal device is indicated to wake up the main receiver. If the indication information carried in the first signal received by the first terminal device does not include the first terminal device identifier corresponding to the first terminal device, the first terminal device is indicated not to wake up the main receiver. Similarly, if the indication information carried in the first signal includes a first terminal device group including the first terminal device, the first terminal device is indicated to wake up the main receiver. Functions of the cell identifier, the tracking area identifier, the RAN area identifier, or the like are the same as functions of the first terminal device identifier. Details are not described herein.

For step S1302:

It should be understood that, for the first terminal device, long-time sleep causes a clock and an operating frequency of the first terminal device to be asynchronous with those of the network device, and a time deviation and/or a frequency deviation between the first terminal device and the network device cause/causes deterioration in receiving performance of receiving the first signal by the WUR. Therefore, the first synchronization signal can be used to enable the first terminal device to obtain time and/or frequency synchronization between the first terminal device and the network device, thereby improving receiving performance of receiving the first signal by the first terminal device.

In a possible implementation, the first synchronization signal is further used to measure WUR link quality. The first terminal device may measure the first synchronization signal in the second state, to obtain WUR link quality. The WUR link quality may be used by the first terminal device to support mobility. In this case, the second state is a new state other than the RRC idle state, the RRC inactive state, and the RRC connected state.

As described in the foregoing "DRX", a probability that the network device actually sends paging to one terminal device in each PO is relatively low, and in C-DRX, not all on duration in each DRX cycle has signaling or data to be sent to the terminal device. Therefore, a spacing between a time domain location at which the network device sends the first signal to the first terminal device and a time domain location at which the SSB is sent is relatively large, that is, the first synchronization signal needs to be sent on a sending occasion that is relatively close to the first signal, so that the first terminal device better receives the first signal.

In a possible implementation, the first synchronization sequence is different from a sequence for generating a PSS and/or an SSS. For example, a sequence length of the first synchronization sequence is different from that of the sequence for generating the PSS and/or the SSS; or a value of correlation between the first synchronization sequence and the sequence for generating the PSS and/or the SSS is less than a threshold; or a time domain resource occupied by the first synchronization signal is different from a time domain resource occupied by the PSS and/or a time domain resource occupied by the SSS.

In other words, because the first synchronization sequence is different from the sequence for generating the PSS and/or the SSS, when receiving the first synchronization signal, an inventory terminal device in a cell does not mistakenly detect the first synchronization signal as the PSS or the SSS, and therefore cannot obtain incorrect time and/or frequency synchronization, thereby alleviating impact on initial access of the inventory terminal device in the cell.

In a possible implementation, a cyclic shift value used by the first synchronization sequence is different from a cyclic shift value used by a sequence for generating a PSS. For example, the cyclic shift value used by the first synchronization sequence is different from $43N_{ID}^{(2)}$ in Formula (2).

It may be understood that, when the second sequence is the first synchronization sequence, for a specific implementation of generating the first synchronization signal in step S1302, refer to the related descriptions of the foregoing "OFDM technology". Details are not described herein again.

When the second sequence is the first synchronization sequence, both the first synchronization sequence and the first sequence are mapped to subcarriers corresponding to OFDM symbols. To avoid a conflict, the first synchronization signal and the first signal occupy different time domain resources (for example, OFDM symbols).

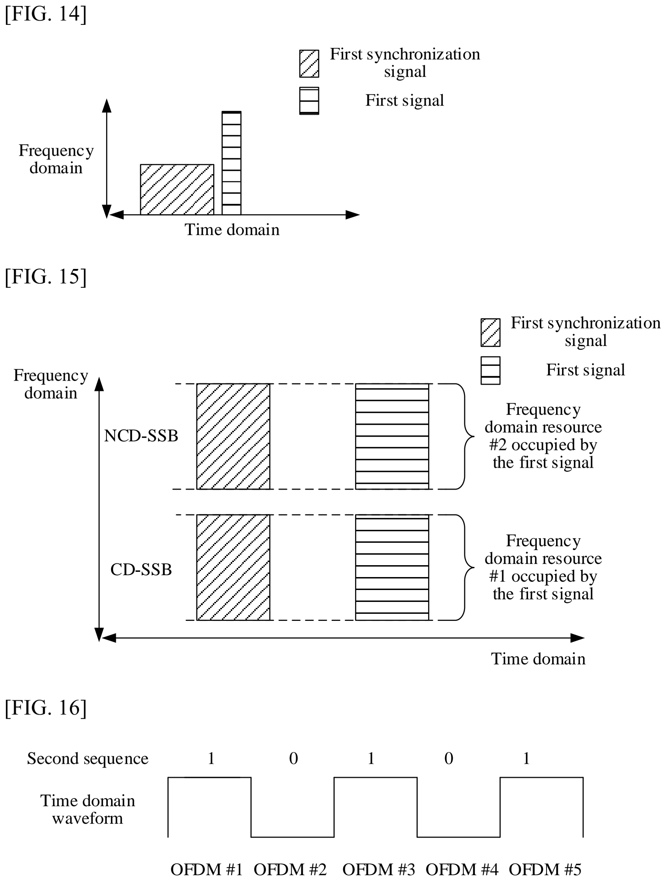

For example, as shown in FIG. 14, the first synchronization signal and the first signal occupy different time domain resources, and the first synchronization signal is before the first signal. Certainly, the first synchronization signal may alternatively be after the first signal. If the first synchronization signal is after the first signal, the first terminal device may perform processing after buffering data.

If the first synchronization signal is before the first signal, the first terminal device may serially process the first synchronization signal and the first signal that are received sequentially, so that overheads of storing data by the first terminal device can be reduced.

It may be understood that there may be a time interval or no time interval between the first synchronization signal and the first signal. This is not specifically limited in this embodiment of this application.

In a possible implementation, the first synchronization sequence is the same as a sequence for generating a PSS and/or an SSS. For details of the sequence for generating the PSS and/or the SSS, refer to the related descriptions of the foregoing "SSB". Details are not described herein again.

In other words, the first synchronization sequence may continue to use the sequence for generating the PSS and/or the SSS, and carry some or all PCI values, that is, the first synchronization signal may be used for initial access of an inventory terminal device in a cell, and may also be used for time and/or frequency synchronization of the first terminal device. Further, because the first synchronization sequence still uses a related design of the sequence for generating the PSS and/or the SSS, that is, the first terminal device may perform correlation detection by using an existing sequence for generating the PSS and/or the SSS, overheads of receiving a signal by a WUR can be reduced.

In a possible implementation, a frequency domain resource occupied by the first synchronization signal is greater than or equal to a frequency domain resource occupied by the PSS or the SSS. The frequency domain resource occupied by the first synchronization signal includes the frequency domain resource occupied by the PSS or the SSS.

For example, the frequency domain resource occupied by the first synchronization signal is 12 RBs, that is, 144 subcarriers.

In other words, the first synchronization signal may reuse the frequency domain resource of the PSS or the SSS, thereby reducing network resource overheads. Further, for the SSS, the frequency domain resource of the first synchronization signal is greater than the frequency domain resource of the SSS, so that interference from a PBCH can be reduced.

In a possible implementation, a time domain resource occupied by the first synchronization signal includes a time domain resource occupied by the PSS and/or a time domain resource occupied by the SSS.

In other words, when the first synchronization sequence continues to use the sequence for generating the PSS and/or the SSS, and the time domain resource of the first synchronization signal includes the PSS and/or the SSS, the network device may reuse a time-frequency resource occupied by an SSB to send the first signal, thereby further reducing network resource overheads.

It may be understood that, for details of time-frequency domain resources occupied by the PSS and the SSS, refer to the related descriptions of the foregoing "SSB". Details are not described herein again.

In a possible implementation, the second sequence is the first synchronization sequence, and the first synchronization signal is an SSB.

In other words, that the first synchronization signal is an SSB means that the first synchronization signal completely reuses the SSB, thereby further reducing network resource overheads.

In a possible implementation, the second sequence is the first synchronization sequence, the first synchronization signal is a CD-SSB, and a frequency domain resource occupied by the first signal includes the CD-SSB.

In another possible implementation, the first synchronization signal is an NCD-SSB, and a frequency domain resource occupied by the first signal does not include a CD-SSB.

It may be understood that, to reduce network overheads, the network device may use an SSB that is located in a same frequency domain resource range as the first signal.

The frequency domain resource occupied by the first signal may be configured by the network device for the first terminal device; or the frequency domain resource occupied by the first signal may be obtained when the first terminal device camps on a cell.

For example, as shown in FIG. 15, the frequency domain resource occupied by the first signal may be classified into a frequency domain resource #1 and a frequency domain resource #2. The frequency domain resource #1 and the frequency domain resource #2 do not overlap in frequency domain, but overlap in time domain.

It should be understood that, as described in the foregoing "CD-SSB and NCD-SSB", the CD-SSB and the NCD-SSB occupy different frequency domain resources, and the CD-SSR and the NCD-SSB may respectively correspond to different BWPs. The frequency domain resource occupied by the first signal may be an initial BWP or an active BWP configured by the network device for the first terminal device; or the frequency domain resource occupied by the first signal may be a frequency domain resource obtained from the network device after the first terminal device camps on a cell.

For example, when the first terminal device is in an RRC idle state or inactive state, the first terminal device has not accessed a network, and therefore the first terminal device receives the first signal by using the initial BWP configured by the network device. When the first terminal device is in an RRC connected state, the first terminal device receives the first signal based on the active BWP.

The foregoing describes the first synchronization signal generated based on the first synchronization sequence, and the following describes the first synchronization signal generated based on the binary second synchronization sequence.

In a possible implementation, the binary sequence may be a sequence including values 1 and 0, or the binary sequence may be a sequence including bits 1 and 0. For example, the second sequence may be represented as [1, 0, 1, 0, 1].

In a possible implementation, one element in the binary sequence occupies one time domain symbol. The time domain symbol may be an OFDM symbol.

As described in the OOK modulated signal generated by multiplexing the OFDM technology in FIG. 8 in the foregoing "WUR and main receiver", an OFDM symbol generated by using a binary sequence is described by using an example with reference to FIG. 16.

For example, as shown in FIG. 16, the second sequence is [1, 0, 1, 0, 1], and the second sequence is output through OOK modulation and OFDM processing sequentially, to obtain five OFDM symbols, which are OFDM #1 to #5 in a time sequence. In other words, a quantity of elements included in the second sequence may be equal to a quantity of generated OFDM symbols.

In a possible implementation, the second sequence is the second synchronization sequence; and the first synchronization signal is obtained by performing OOK modulation and OFDM processing based on the second sequence; or the first synchronization signal is obtained by performing FSK modulation and OFDM processing based on the second sequence.

For specific implementations of performing OOK modulation and OFDM processing based on the second sequence to obtain the first synchronization signal, and performing FSK modulation and OFDM processing based on the second sequence to obtain the first synchronization signal, refer to the related descriptions of the foregoing "WUR and main receiver". Details are not described herein again.

In other words, in addition to receiving the OOK modulated signal and/or the FSK modulated signal, the WUR of the first terminal device may further receive a signal generated based on a complex sequence, so that the network device can send the OOK modulated signal or the FSK modulated signal and the signal generated based on the complex sequence to the first terminal device.

In a possible implementation, the second sequence is the second synchronization sequence; and the time domain resource occupied by the first synchronization signal at least partially overlaps the time domain resource occupied by the first signal.

In other words, the first signal and the first synchronization signal may reuse a part of a time-frequency resource for each other, thereby reducing network resource overheads.

As described above, there is no time sequence requirement for time domain start locations of the first signal and the first synchronization signal. Therefore, the first signal may be before the first synchronization signal, or may be after the first synchronization signal; or the first signal and the first synchronization signal have a same time domain start location.

In addition, the frequency domain resource occupied by the first signal may be greater than the frequency domain resource occupied by the first synchronization signal, or the frequency domain resource occupied by the first signal is less than or equal to the frequency domain resource occupied by the first synchronization signal.

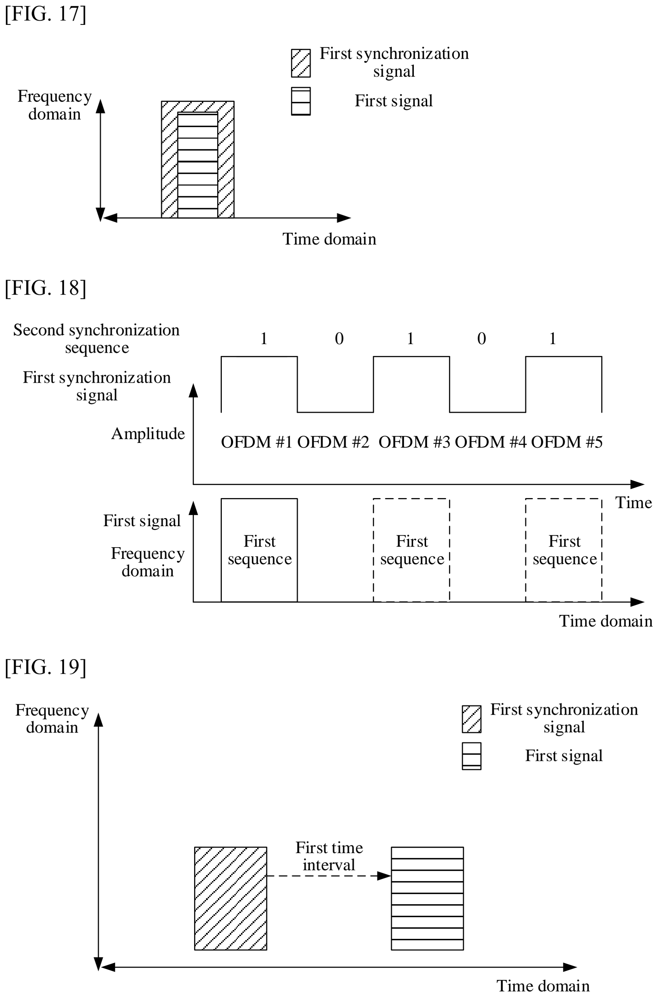

For example, FIG. 17 is a diagram of a time-frequency resource occupied between the first synchronization signal and the first signal according to an embodiment of this application. As shown in FIG. 17, a time-frequency resource occupied by the first signal is a subset of the time-frequency resource occupied by the first synchronization signal. In other words, the time-frequency resource occupied by the first signal is superimposed on the time-frequency resource occupied by the first synchronization signal.

It may be understood that, for the OOK modulated signal generated by multiplexing the OFDM technology in FIG. 8 in the foregoing "WUR and main receiver", OOK modulation does not concern a specific value of the frequency domain sequence A. As long as the frequency domain sequence A is not an all-zero value, that is, signal power in the symbol is not 0, it may be determined whether a sent bit is 1 or 0. Similarly, for the FSK modulated signal generated by multiplexing the OFDM technology, FSK modulation does not concern a specific value of the frequency domain sequence A, but concerns a frequency of a subcarrier mapped by using the frequency domain sequence A.

In other words, for the OOK modulated signal and/or an FSK modulated signal generated by multiplexing the OFDM technology, the first synchronization signal generated based on the second synchronization sequence does not concern specific values of different subcarriers in frequency domain, so that the first signal can completely reuse some time-frequency resources occupied by the first synchronization signal, thereby further reducing network resource overheads.

An example in which the first synchronization signal is an OOK modulated signal is used below to describe a specific manner in which the first signal is superimposed on the time-frequency resource occupied by the first synchronization signal.

In a possible implementation, the first signal occupies N OFDM symbols in M OFDM symbols, where the M OFDM symbols are OFDM symbols occupied by the first synchronization signal, the N OFDM symbols are symbols that carry first elements in the M OFDM symbols, the first elements are ON elements in the second synchronization sequence, M is greater than or equal to N, M and N are integers, and N is greater than or equal to 1.

As shown in FIG. 8 and FIG. 16, the binary sequence includes a bit 1 or a bit 0, and the bit 1 may be referred to as an ON element. It may be understood that, as shown in FIG. 16, a quantity of elements included in the binary sequence is the same as a quantity of OFDM symbols occupied by a modulated signal, that is, M is a quantity of elements included in the second synchronization sequence (or referred to as a sequence length).

In other words, the first signal may occupy N ON symbols in the M OFDM symbols occupied by the first synchronization signal.

It should be understood that N may be determined based on a quantity of elements included in the first sequence and a quantity of frequency domain units (or referred to as subcarriers) corresponding to the OFDM symbols.

For example, the binary sequence shown in FIG. 16 is the second synchronization sequence. FIG. 18 is a diagram of superposition of the first signal and the first synchronization signal according to an embodiment of this application. As shown in FIG. 18, the first synchronization signal occupies M=5 OFDM symbols, and the five OFDM symbols may include three ON symbols: an OFDM #1, an OFDM #3, and an OFDM #5. If the quantity of elements included in the first sequence is less than or equal to the quantity of subcarriers occupied by the first synchronization signal, the first signal may occupy one ON symbol, that is, the N symbols occupied by the first signal are any one of the foregoing three ON symbols (OFDM #1, OFDM #3, and OFDM #5).

If the quantity of elements included in the first sequence is greater than the quantity of subcarriers occupied by the first synchronization signal, the first signal occupies a plurality of ON symbols. For example, if the first synchronization signal occupies 20 subcarriers, and the first sequence includes 35 elements, the first synchronization signal occupies two ON symbols.

In a possible implementation, the first sequence may include a plurality of subsequences. The subsequences may be the same or different. A quantity of elements included in each subsequence is less than or equal to the quantity of subcarriers occupied by the first synchronization signal.

In other words, when all the subsequences are the same, the N ON symbols occupied by the first signal carry a same sequence. This can increase energy of the first signal, and improve coverage performance of the first signal. When the subsequences are different, the subsequences may carry different information. This can increase a capacity of information carried in the first signal.

It should be understood that, when the first synchronization signal is an FSK modulated signal, because signal power in an OFDM symbol corresponding to a bit 0 is not 0, the bit 0 may also carry a frequency domain sequence, that is, the FSK modulated signal is relative to an OOK modulated signal, and the first signal may be superimposed on an OFF symbol corresponding to an OFF element. For a specific implementation, refer to the related descriptions of superimposing the first signal on the first synchronization signal modulated by OOK. Details are not described herein again.

In a possible implementation, the time domain resource occupied by the first synchronization signal is different from the time domain resource occupied by the first signal; and a first time interval between an end location of the time domain resource occupied by the first synchronization signal and a start location of the time domain resource occupied by the first signal is predefined, or is negotiated by the network device and the first terminal device in advance, or is configured by the network device for the first terminal device. This is not specifically limited in embodiments of this application.

In other words, a time sequence relationship and a time offset may be defined between the first synchronization signal and the first signal, so that the first terminal device can determine, by receiving the first synchronization signal and the first time interval, whether the first synchronization signal is before or after the first signal. Further, the first terminal device may determine, based on the first time interval, the start location of the time domain resource occupied by the first signal.

For example, the first synchronization signal is before the first signal. As shown in FIG. 19, a time offset between the first synchronization signal and the first signal is a first time interval. Further, after obtaining time synchronization by using the first synchronization signal, the first terminal device may start to receive the first signal in the first time interval after the end location of the time domain resource occupied by the first synchronization signal. In this way, the first terminal device does not need to receive the first signal all the time after receiving the first synchronization signal, thereby reducing power consumption.

In a possible implementation, there are a plurality of first synchronization signals, and the plurality of first synchronization signals respectively correspond to different beam directions.

In other words, the network device may send a plurality of first synchronization signals at different time by using different beams, that is, the first synchronization signal supports beam sweeping.

In a possible implementation, different first time intervals are configured for the plurality of first synchronization signals. In other words, different first time intervals may be configured for the first synchronization signal corresponding to each beam. In this way, the first terminal device may determine time domain start locations of a plurality of first signals based on different first synchronization signals, where the plurality of first signals occupy different time domain resources.

In another possible implementation, a same first time interval is configured for the plurality of first synchronization signals.

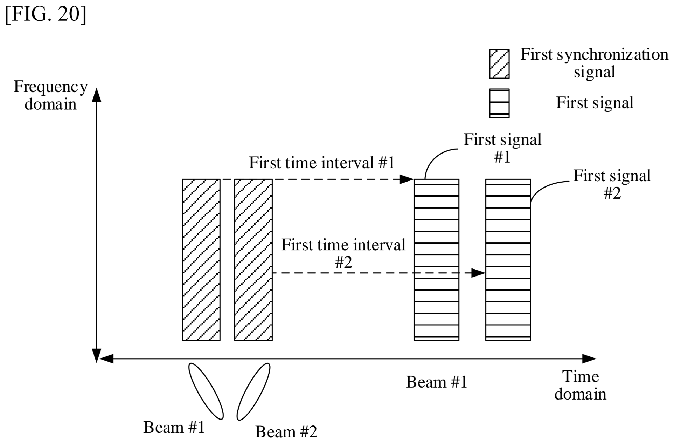

For example, as shown in FIG. 20, there are two first synchronization signals: a first synchronization signal #1 sent on a beam #1 and a first synchronization signal #2 sent on a beam #2. A first time interval #1 is configured for the first synchronization signal #1, and a first time interval #2 is configured for the first synchronization signal #2. The first synchronization signal #1 and the first time interval #1 may indicate a time domain start location of the first signal #1, and the first synchronization signal #2 and the first time interval #2 may indicate a time domain start location of the first signal #2.

For step S1303:

It may be understood that the network device may send the first signal and/or the first synchronization signal to the first terminal device in a unicast manner; or the network device may send, in a multicast manner, the first signal and/or the first synchronization signal to a terminal device group including the first terminal device; or the network device may send the first signal and/or the first synchronization signal to the first terminal device in a broadcast manner. This is not specifically limited in this embodiment of this application.

In a possible implementation, the first synchronization signal is a CD-SSB or an NCD-SSB, and that the first terminal device receives the first synchronization signal from the network device (step S1303) includes:

The first terminal device receives a PSS and an SSS in the first synchronization signal from the network device.

In other words, when receiving the first synchronization signal, the first terminal device receives only the PSS and the SSS, and does not read a PBCH.

In a possible implementation, the second sequence is the second synchronization sequence, and that the first terminal device receives the first signal and the first synchronization signal from the network device (step S1303) includes:

After receiving the first synchronization signal in a third state, the first terminal device enters a fourth state.

The first terminal device receives the first signal in a fourth state.

The third state may be a state in which the WUR of the first terminal device receives or processes only an OOK modulated signal and/or an FSK modulated signal; or the third state may be a state in which the WUR of the first terminal device supports only OOK and/or FSK modulation; or the third state may be a state in which power consumption of the WUR of the first terminal device is less than power consumption of receiving a signal generated based on a complex sequence; or the third state may be a state in which the WUR supports signal receiving through envelope detection; or the third state may be a state in which the WUR does not support signal receiving through correlation detection.

The fourth state may be a state in which the WUR of the first terminal device receives or processes a signal generated based on a complex sequence; or the fourth state may be a state in which the WUR of the first terminal device supports only a signal generated based on a complex sequence; or the fourth state may be a state in which power consumption of the WUR of the first terminal device is greater than that of receiving an OOK modulated signal and/or an FSK modulated signal; or the fourth state may be a state in which the WUR of the first terminal device supports signal receiving through correlation detection.

It may be understood that the power consumption of the WUR of the first terminal device in the third state is less than the power consumption of the WUR of the first terminal device in the fourth state, and a signal receiving capability of the WUR of the first terminal device in the third state is weaker than a signal receiving capability of the WUR of the first terminal device in the fourth state.

In other words, the first terminal device receives the first synchronization signal in the third state with relatively low power consumption, and the first terminal device enters the fourth state with relatively high power consumption only when receiving the first synchronization signal, and then further receive the first signal. In other words, the WUR of the first terminal device may implement segment-based wake-up, and enter the fourth state with relatively high power consumption from the third state with low power consumption only when required. This can reduce power consumption of the first terminal device.

In a possible implementation, the first terminal device keeps receiving a signal in the third state.

In other words, the first terminal device keeps receiving a signal in the third state, to avoid missing receiving the first signal, thereby reducing a waiting delay.

In a possible implementation, the first terminal device receives the first signal and the first synchronization signal from the network device on a first occasion. The first occasion may be agreed on in advance; or the first occasion may be negotiated by the network device and the first terminal device in advance; or the first occasion may be configured by the network device for the first terminal device.

In a possible implementation, the first occasion may be periodic.

In other words, because the first occasion is agreed on by the first terminal device and the network device, the network device does not send the first signal to the first terminal device in a time other than the first occasion. In this way, the first terminal device may turn off the WUR in a time other than the first occasion, thereby further reducing power consumption of the first terminal device.

For step S1304:

It should be understood that a principle in which the first terminal device obtains time and/or frequency synchronization based on the first synchronization signal is the same as the principle in which the terminal device obtains time and/or frequency synchronization based on the SSB in the foregoing "SSB". For details, refer to the related descriptions in the "SSB". Details are not described herein again.

For step S1305:

It may be understood that the related descriptions of indicating, by the first signal, the first terminal device to enter the first state are provided in step S1301. For details, refer to step S1301. Details are not described herein again.

In a possible implementation, the signal transmission method shown in FIG. 13 further includes the following step:

S1306: The first terminal device sends capability information to the network device. Correspondingly, the network device receives the capability information from the first terminal device. The capability information of the first terminal device is used by the first terminal device to send the first signal and the first synchronization signal. The capability information of the first terminal may include capability information of the WUR of the first terminal device, for example, whether OOK modulation, FSK modulation, or generation of a signal based on a complex sequence is supported. For another example, the capability information of the WUR may include whether to receive or process an OOK modulated signal, an FSK modulated signal, or a signal generated based on a complex sequence.

It may be understood that the network device may determine, based on the capability information of the first terminal device, a sequence for sending a signal to the first terminal device. For example, if the first terminal device supports only generation of a signal based on a complex sequence, the network device sends the first signal and the first synchronization signal generated based on the first synchronization sequence to the first terminal device. If the first terminal device further supports OOK modulation and/or FSK modulation, the network device may send the first signal and the first synchronization signal generated based on the second synchronization sequence to the first terminal device.

In this embodiment of this application, the network device sends the first synchronization signal and the first signal to the first terminal device. Therefore, the first terminal device may obtain time and/or frequency synchronization by using the first synchronization signal, so as to determine a start moment of an OFDM symbol, duration of the OFDM symbol, a frequency domain range, or the like, so that the first terminal device can better determine time domain and/or frequency domain information for receiving the first signal. Further, because the first signal is generated based on the complex sequence, the first terminal device may receive the first signal through correlation detection, so that not only amplitude information can be obtained, but also phase information can be retained, thereby improving receiver sensitivity of receiving a second signal.

The actions of the first terminal device in steps S1301 to S1306 may be performed by the processor 1001 in the communication apparatus 100 shown in FIG. 10 by invoking the application program code stored in the memory 1003 to indicate the communication apparatus 100 to perform the actions. The actions of the network device in steps S1301 to S1306 may be performed by the processor 1001 in the communication apparatus 100 shown in FIG. 10 by invoking the application program code stored in the memory 1003 to indicate the communication apparatus 100 to perform the actions. This is not limited in embodiments of this application.

FIG. 13 describes the signal transmission method provided in the embodiment of this application by using interaction between the network device and the first terminal device as an example. The following describes interaction between the network device, the first terminal device, and a second terminal device.

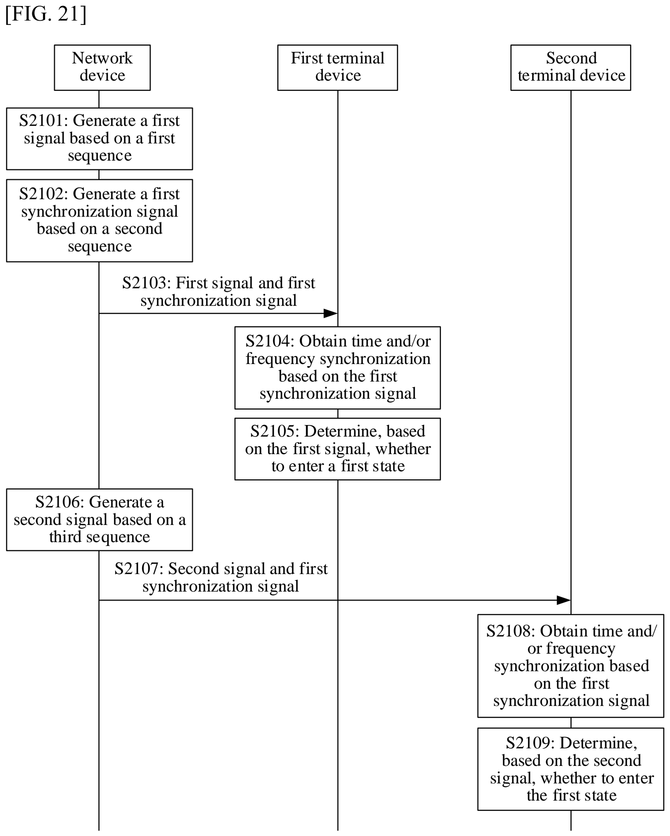

FIG. 21 is a schematic flowchart of a signal transmission method according to an embodiment of this application. A difference between an example shown in FIG. 21 and the example shown in FIG. 13 lies in that the first terminal device and the second terminal device that have different capabilities exist in a network. Specifically, a WUR of the first terminal device supports receiving of both an OOK modulated signal and/or an FSK modulated signal, and a signal generated based on a complex sequence. A WUR of the second terminal device supports receiving of an OOK modulated signal and/or an FSK modulated signal, but does not support receiving of a signal generated based on a complex sequence; or the second terminal device may support receiving of an OOK modulated signal and/or an FSK modulated signal in the second state, but does not support receiving of a signal generated based on a complex sequence.

As shown in FIG. 21, the signal transmission method provided in this embodiment of this application includes: Steps S2101 to S2105. A difference between steps S2101 to S2105 and steps S1301 to S1305 lies in that the network device generates a first synchronization signal based on a second synchronization sequence in step S2102, other steps are the same, and details are not described herein again.

It may be understood that the first synchronization signal is a synchronization signal generated based on a binary sequence. For details, refer to the related descriptions of the second synchronization sequence in step S1302.

S2106: The network device generates a second signal based on a third sequence, where the third sequence is a binary sequence, the second signal indicates the second terminal device whether to enter the first state, and a time domain resource occupied by the second signal is different from the time domain resource occupied by the first synchronization signal.

For a specific implementation of step S2106, refer to step S1302. Details are not described herein again.

S2107: The network device sends the second signal and the first synchronization signal to the second terminal device.

For a related implementation of step S2107, refer to step S1303. Details are not described herein again.

In other words, the network device may send the first synchronization signal to the first terminal device and the second terminal device, to reuse the first synchronization signal, thereby reducing network resource overheads.

In a possible implementation, the time domain resource occupied by the second signal at least partially overlaps a time domain resource occupied by the first signal.

In a possible implementation, the first signal occupies N OFDM symbols in M OFDM symbols, where the M OFDM symbols are OFDM symbols occupied by the second signal, the N OFDM symbols are symbols that carry first elements in the M OFDM symbols, the first elements are ON elements in the third sequence, M is greater than or equal to N, M and N are integers, and N is greater than or equal to 1.

It may be understood that the second signal and the first synchronization signal are signals generated in a same manner, and the second signal and the first synchronization signal may be OOK modulated signals or FSK modulated signals. With reference to the foregoing related descriptions of step S1302, the first signal may be superimposed on the second signal to further reduce network resource overheads.

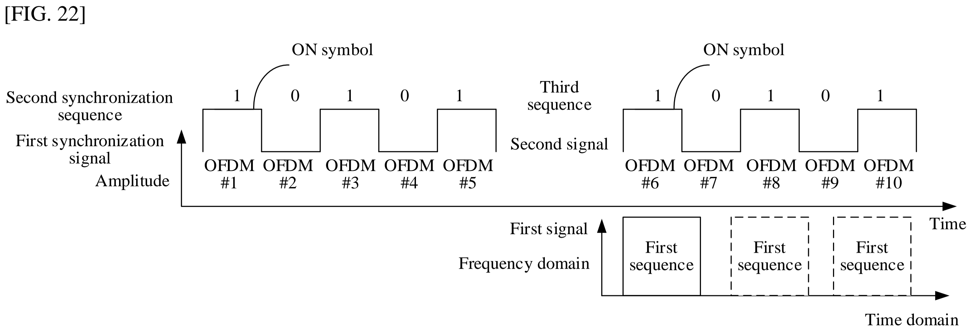

For example, the second signal is an OOK modulated signal, and the third sequence is the same as the second synchronization sequence. As shown in FIG. 22, the first synchronization signal and the second signal occupy different time domain resources. The first signal may be superimposed on an OFDM symbol #6, an OFDM symbol #8, and an OFDM symbol #10.

In a possible implementation, the third sequence is an encoded sequence. The third sequence may be a sequence obtained after Manchester encoding. It should be understood that a difference between superimposing the first signal on the second signal and superimposing the first signal on the first synchronization signal lies in that the second signal carries data, which is random, and is not conducive to determining a time domain resource occupied by the first signal. A quantity of uncertain time domain resources can be reduced by encoding the third sequence. For example, through Manchester encoding, there are only two time domain resources that are not determined for the first signal, and therefore a time domain resource location can be determined only by performing blind detection twice.

It should be understood that there is no sequence requirement for steps S2101, S2102, and S2106, that is, steps S2101, S2102, and S2106 may be simultaneously performed, or may be separately performed. This is not specifically limited in this embodiment of this application.

S2108: The second terminal device obtains time and/or frequency synchronization based on the first synchronization signal.

For a specific implementation of this step, refer to step S1304. Details are not described herein again.

S2109: The second terminal device determines, based on the second signal, whether to enter the first state.

For a specific implementation of this step, refer to step S1305. Details are not described herein again.

In a possible implementation, the signal transmission method provided in FIG. 21 further includes the following step:

S2110: The first terminal device sends capability information of the first terminal device to the network device. Correspondingly, the network device receives the capability information from the first terminal device.

S2111: The second terminal device sends the capability information of the second terminal device to the network device. Correspondingly, the network device receives the capability information from the second terminal device.

For specific implementations of steps S2110 and S2111, refer to step S1306. Details are not described herein again.

The actions of the first terminal device in steps S2101 to S2108 may be performed by the processor 1001 in the communication apparatus 100 shown in FIG. 10 by invoking the application program code stored in the memory 1003 to indicate the communication apparatus 100 to perform the actions. The actions of the second terminal device in steps S2101 to S2108 may be performed by the processor 1001 in the communication apparatus 100 shown in FIG. 10 by invoking the application program code stored in the memory 1003 to indicate the communication apparatus 100 to perform the actions. The actions of the network device in steps S2101 to S2108 may be performed by the processor 1001 in the communication apparatus 100 shown in FIG. 10 by invoking the application program code stored in the memory 1003 to indicate the communication apparatus 100 to perform the actions. This is not limited in embodiments of this application.

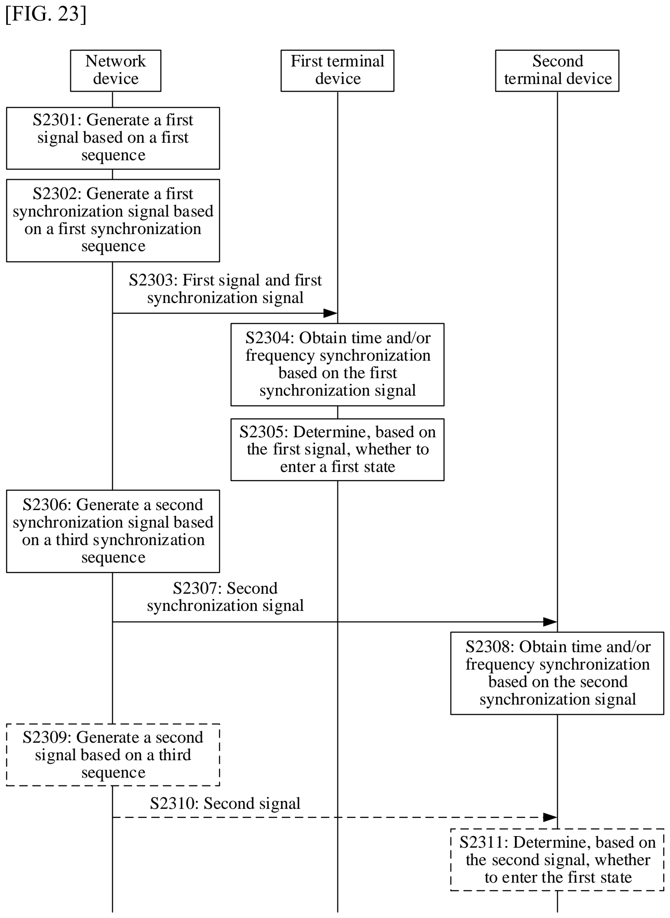

FIG. 23 is a schematic flowchart of a signal transmission method according to an embodiment of this application. A difference between an example shown in FIG. 23 and the example shown in FIG. 21 lies in that a WUR of the first terminal device supports only receiving of a signal generated based on a complex sequence, and a WUR of the second terminal device supports only receiving of an OOK modulated signal and/or an FSK modulated signal.

As shown in FIG. 23, the signal transmission method provided in this embodiment of this application includes:

Steps S2301 to S2305. A difference between steps S2101 to S2105 and steps S1301 to S1305 lies in that the network device generates a first synchronization signal based on a first synchronization sequence in step S2302, other steps are the same, and details are not described herein again.

In other words, both the first signal and the first synchronization signal that are sent by the network device to the first terminal device are signals generated based on complex sequences.

It may be understood that the first synchronization signal is a synchronization signal generated based on a binary sequence. For details, refer to the related descriptions of the second synchronization sequence in step S1302.

S2306: The network device generates a second synchronization signal based on a third synchronization sequence. The third synchronization sequence is a binary sequence. The second synchronization signal is used for time and/or frequency synchronization.

The second synchronization signal may be an OOK modulated signal or an FSK modulated signal. For details, refer to the related descriptions of step S1302. Details are not described herein again.

It should be understood that there is no sequence requirement for steps S2201, S2202, and S2206, that is, steps S2201, S2202, and S2206 may be simultaneously performed, or may be separately performed. This is not specifically limited in this embodiment of this application.

S2307: The network device sends the second synchronization signal to the second terminal device.

For a related implementation of step S2307, refer to step S1303. Details are not described herein again.

In a possible implementation, a time domain resource occupied by the second synchronization signal at least partially overlaps a time domain resource occupied by the first signal and/or a time domain resource occupied by the first synchronization signal.

In a possible implementation, the first signal and/or the first synchronization signal occupy/occupies N OFDM symbols in M OFDM symbols, where the M OFDM symbols are OFDM symbols occupied by the second synchronization signal, the N OFDM symbols are symbols that carry first elements in the M OFDM symbols, the first elements are ON elements in the third synchronization sequence, M is greater than or equal to N, M and N are integers, and N is greater than or equal to 1.

With reference to the related descriptions of step S1302, the first signal and/or the first synchronization signal may be superimposed on the second synchronization signal to reduce network resource overheads. For a specific implementation, refer to step S1302 and step S2107.

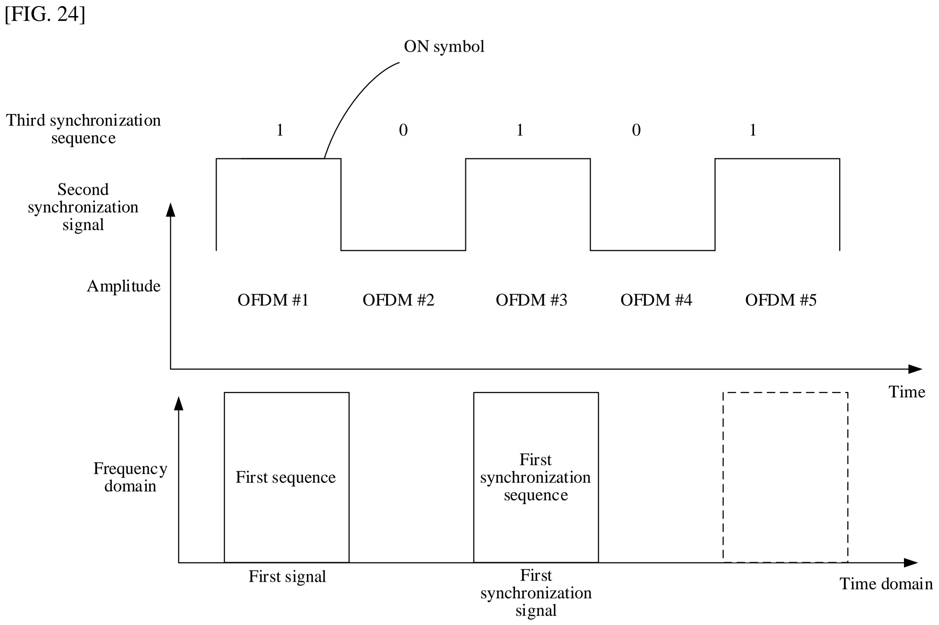

For example, as shown in FIG. 24, the first signal may be superimposed on an OFDM symbol #1 occupied by the second synchronization signal, and the first synchronization signal may be superimposed on an OFDM symbol #3.

S2308: The second terminal device obtains time and/or frequency synchronization based on the second synchronization signal.

For a specific implementation of this step, refer to step S2108. Details are not described herein again.

In a possible implementation, the signal transmission method shown in FIG. 23 further includes the following step:

S2309: The network device generates a second signal based on a third sequence, where the third sequence is a binary sequence, the second signal indicates the second terminal device whether to enter the first state, and a time domain resource occupied by the second signal is different from the time domain resource occupied by the second synchronization signal.

It should be understood that there is no sequence requirement for step S2309 and step S2306, that is, step S2309 and step S2306 may be simultaneously performed, or may be separately performed. This is not specifically limited in this embodiment of this application.

S2310: The network device sends the second signal to the second terminal device.

In a possible implementation, the time domain resource occupied by the second signal at least partially overlaps the time domain resource occupied by the first signal and/or the time domain resource occupied by the first synchronization signal.

In a possible implementation, the first signal and/or the first synchronization signal occupy/occupies N OFDM symbols in M OFDM symbols, where the M OFDM symbols are OFDM symbols occupied by the second signal, the N OFDM symbols are symbols that carry first elements in the M OFDM symbols, the first elements are ON elements in the third sequence, M is greater than or equal to N, M and N are integers, and N is greater than or equal to 1.

It may be understood that the time domain resource occupied by the second signal at least partially overlaps the time domain resource occupied by the first signal and/or the time domain resource occupied by the first synchronization signal, so that network resource overheads can be further reduced.

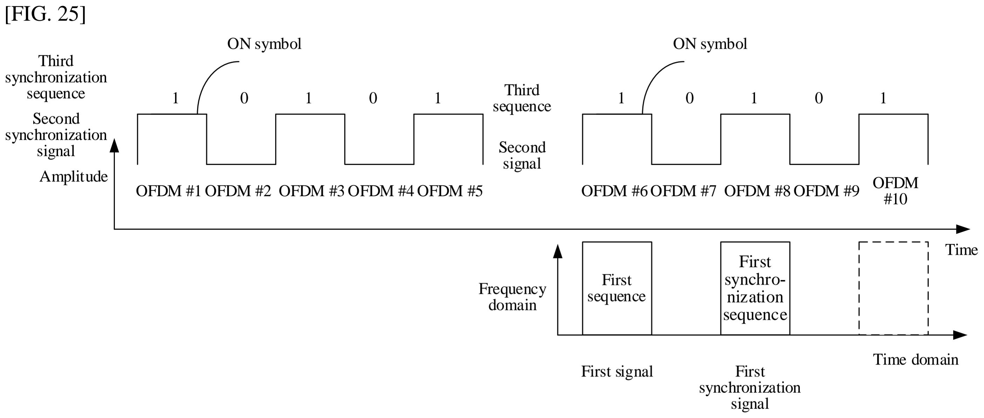

For example, as shown in FIG. 25, the first signal may be superimposed on an OFDM symbol #6 occupied by the second signal, and the first synchronization signal may be superimposed on an OFDM symbol #8 occupied by the second signal.

It may be understood that the first signal and the first synchronization signal may be alternatively superimposed on the second synchronization signal and the second signal respectively.

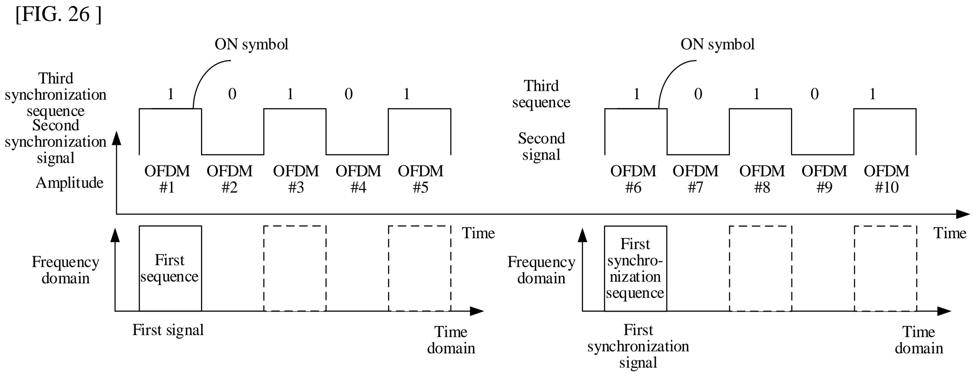

For example, as shown in FIG. 26, the first signal may be superimposed on an OFDM symbol #1 occupied by the second synchronization signal, and the first synchronization signal may be superimposed on an OFDM symbol #6 occupied by the second signal.

For superposition of the first signal and/or the first synchronization signal and the second signal, refer to the related descriptions of step S2107. Details are not described herein again.

S2311: The second terminal device determines, based on the second signal, whether to enter the first state.

For a specific implementation of this step, refer to step S1305. Details are not described herein again.

The actions of the first terminal device in steps S2301 to S2311 may be performed by the processor 1001 in the communication apparatus 100 shown in FIG. 10 by invoking the application program code stored in the memory 1003 to indicate the communication apparatus 100 to perform the actions. The actions of the second terminal device in steps S2301 to S2311 may be performed by the processor 1001 in the communication apparatus 100 shown in FIG. 10 by invoking the application program code stored in the memory 1003 to indicate the communication apparatus 100 to perform the actions. The actions of the network device in steps S2301 to S2311 may be performed by the processor 1001 in the communication apparatus 100 shown in FIG. 10 by invoking the application program code stored in the memory 1003 to indicate the communication apparatus 100 to perform the actions. This is not limited in embodiments of this application.

The foregoing mainly describes the solutions provided in embodiments of this application from a perspective of interaction between all network elements. Correspondingly, an embodiment of this application further provides a communication apparatus, and the communication apparatus is configured to implement the foregoing methods. The communication apparatus may be the network device in the foregoing method embodiments, an apparatus including the foregoing network device, or a component that can be used in the network device. Alternatively, the communication apparatus may be the first terminal device in the foregoing method embodiments, an apparatus including the foregoing first terminal device, or a component that can be used in the first terminal device. It may be understood that, to implement the foregoing functions, the communication apparatus includes hardware structures and/or software modules corresponding to the functions. A person skilled in the art should be easily aware that, in combination with units and algorithm steps of the examples described in embodiments disclosed in this specification, this application may be implemented by using hardware or a combination of hardware and computer software. Whether a function is performed by using hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus is divided into functional modules based on the foregoing method embodiments. For example, each functional module corresponding to each function may be obtained through division, or two or more functions may be integrated into one processing module. The integrated module may be implemented in a form of hardware, or may be implemented in a form of a software functional module. It should be understood that division into modules in embodiments of this application is an example, and is merely logical function division. During actual implementation, there may be another division manner.

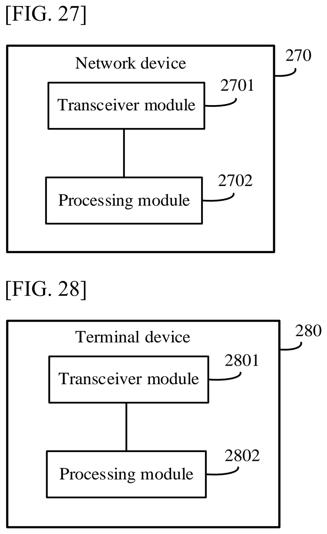

For example, the communication apparatus is the network device in the foregoing method embodiment. FIG. 27 is a diagram of a structure of a network device 270. The network device 270 includes a transceiver module 2701 and a processing module 2702. The transceiver module 2701 may also be referred to as a transceiver unit, and is configured to implement a transceiver function. For example, the transceiver module may be a transceiver circuit, a transceiver machine, a transceiver, or a communication interface. Further, the transceiver module 2701 includes a main receiver of the network device and a secondary receiver of the network device.

The processing module 2702 is configured to generate a first signal based on a first sequence, and generate a first synchronization signal based on a second sequence. The transceiver module 2701 is configured to send the first signal and the first synchronization signal to a first terminal device. The first sequence is a complex sequence, and the first signal indicates the first terminal device whether to enter a first state. The second sequence is a first synchronization sequence or a second synchronization sequence, the first synchronization sequence is a complex sequence, the second synchronization sequence is a binary sequence, and the first synchronization signal is for time and/or frequency synchronization.

In some embodiments, the first synchronization sequence is the same as a sequence for generating a primary synchronization signal PSS and/or a secondary synchronization signal SSS.

In some embodiments, the first synchronization sequence is different from a sequence for generating a PSS and/or an SSS.

In some embodiments, the first synchronization sequence is the same as a sequence for generating a primary synchronization signal PSS and/or a secondary synchronization signal SSS.

In some embodiments, a frequency domain resource occupied by the first synchronization signal is greater than or equal to a frequency domain resource occupied by the PSS or the SSS.

In some embodiments, a time domain resource occupied by the first synchronization signal includes a time domain resource occupied by the PSS and/or a time domain resource occupied by the SSS.

In some embodiments, the second sequence is the first synchronization sequence, and the first synchronization signal is an SSB.

In some embodiments, the second sequence is the first synchronization sequence; and the first synchronization signal is a cell defining synchronization signal/physical broadcast channel block CD-SSB, and a frequency domain resource occupied by the first signal includes the CD-SSB; or the first synchronization signal is a non-cell defining synchronization signal/physical broadcast channel block NCD-SSB, and a frequency domain resource occupied by the first signal does not include a CD-SSB.

In some embodiments, the second sequence is the second synchronization sequence; and the time domain resource occupied by the first synchronization signal at least partially overlaps the time domain resource occupied by the first signal.

In some embodiments, the first signal occupies N orthogonal frequency division multiplexing OFDM symbols in M OFDM symbols, where the M OFDM symbols are OFDM symbols occupied by the first synchronization signal, the N OFDM symbols are symbols that carry first elements in the M OFDM symbols, the first elements are ON elements in the second synchronization sequence, M is greater than or equal to N, M and N are integers, and N is greater than or equal to 1.

In some embodiments, the first sequence carries at least some information in target identification information, and the target identification information includes one or more of the following: identification information of a target terminal device, identification information of a target cell, identification information of a target terminal device group, identification information of a tracking area, or identification information of a radio access network RAN area.

In some embodiments, the first sequence includes one or more of the following sequences: a Zadoff-Chu sequence, an m-sequence, or a gold sequence.

In some embodiments, the time domain resource occupied by the first synchronization signal is different from the time domain resource occupied by the first signal; and a first time interval between an end location of the time domain resource occupied by the first synchronization signal and a start location of the time domain resource occupied by the first signal is predefined, or is negotiated by the network device and the terminal device in advance, or is configured by the network device for the terminal device. This is not specifically limited in embodiments of this application.

In some embodiments, the processing module 2702 is further configured to generate a second signal based on a third sequence, where the third sequence is a binary sequence, the second signal indicates a second terminal device whether to enter the first state, and a time domain resource occupied by the second signal is different from a time domain resource occupied by the first synchronization signal; and the transceiver module 2701 is further configured to send the second signal and the first synchronization signal to the second terminal device.

In some embodiments, a time domain resource occupied by the second signal at least partially overlaps the time domain resource occupied by the first signal.

In some embodiments, the first signal occupies N OFDM symbols in M OFDM symbols, where the M OFDM symbols are OFDM symbols occupied by the second signal, the N OFDM symbols are symbols that carry first elements in the M OFDM symbols, the first elements are ON elements in the third sequence, M is greater than or equal to N, M and N are integers, and N is greater than or equal to 1.

In some embodiments, the processing module 2702 is further configured to generate a second synchronization signal based on a third synchronization sequence, where the third synchronization sequence is a binary sequence, and the second synchronization signal is used for time and/or frequency synchronization; and the transceiver module 2701 is further configured to send the second synchronization signal to the second terminal device.

In some embodiments, a time domain resource occupied by the second synchronization signal at least partially overlaps the time domain resource occupied by the first signal and/or the time domain resource occupied by the first synchronization signal.

In some embodiments, the first signal and/or the first synchronization signal occupy/occupies N OFDM symbols in M OFDM symbols, where the M OFDM symbols are OFDM symbols occupied by the second synchronization signal, the N OFDM symbols are symbols that carry first elements in the M OFDM symbols, the first elements are ON elements in the third synchronization sequence, M is greater than or equal to N, M and N are integers, and N is greater than or equal to 1.

In some embodiments, the processing module 2702 is further configured to generate the second signal based on the third sequence, where the third sequence is a binary sequence, the second signal indicates the second terminal device whether to enter the first state, and the time domain resource occupied by the second signal is different from the time domain resource occupied by the second synchronization signal; and the transceiver module 2701 is further configured to send the second signal to the second terminal device.

In some embodiments, the time domain resource occupied by the second signal at least partially overlaps the time domain resource occupied by the first signal and/or the time domain resource occupied by the first synchronization signal.

In some embodiments, the first signal and/or the first synchronization signal occupy/occupies N OFDM symbols in M OFDM symbols, where the M OFDM symbols are OFDM symbols occupied by the second signal, the N OFDM symbols are symbols that carry first elements in the M OFDM symbols, the first elements are ON elements in the third sequence, M is greater than or equal to N, M and N are integers, and N is greater than or equal to 1.

In some embodiments, the transceiver module 2701 is further configured to receive capability information from the first terminal device and/or the second terminal device, where the capability information includes one or more of the following: whether on-off keying OOK modulation is supported, whether frequency-shift keying FSK modulation is supported, or whether generation of a signal based on a complex sequence is supported.

All related content of the steps in the foregoing method embodiments may be cited in function descriptions of the corresponding functional modules. Details are not described herein again.

In this embodiment of this application, the network device 270 is presented in a form of obtaining each functional module through division in an integrated manner. Herein, "module" may be a specific ASIC, a circuit, a processor that executes one or more software or firmware programs, a memory, an integrated logic circuit, and/or another component capable of providing the foregoing functions. In a simple embodiment, a person skilled in the art may figure out that the network device 270 may be in a form of the communication apparatus 100 shown in FIG. 10.

For example, the processor 1001 in the communication apparatus 100 shown in FIG. 10 may invoke computer-executable instructions stored in the memory 1003, so that the communication apparatus 100 performs the signal transmission method in the foregoing method embodiment.

Specifically, functions/implementation processes of the transceiver module 2701 and the processing module 2702 in FIG. 27 may be implemented by the processor 1001 in the communication apparatus 100 shown in FIG. 10 by invoking the computer-executable instructions stored in the memory 1003. Alternatively, a function/implementation process of the processing module 2702 in FIG. 27 may be implemented by the processor 1001 in the communication apparatus 100 shown in FIG. 10 by invoking the computer-executable instructions stored in the memory 1003, and a function/implementation process of the transceiver module 2701 in FIG. 27 may be implemented by the communication interface 1004 in the communication apparatus 100 shown in FIG. 10.

Because the network device 270 provided in this embodiment of this application may perform the foregoing signal transmission method, for a technical effect that can be obtained by the network device, refer to the foregoing method embodiment. Details are not described herein again.

Alternatively, for example, the communication apparatus is the terminal device in the foregoing method embodiment. FIG. 28 is a diagram of a structure of a terminal device 280. The terminal device 280 includes a transceiver module 2801 and a processing module 2802. The transceiver module 2801 may also be referred to as a transceiver unit, and is configured to implement a transceiver function. For example, the transceiver module may be a transceiver circuit, a transceiver machine, a transceiver, or a communication interface.

The transceiver module 2801 is configured to receive a first signal and a first synchronization signal from a network device. The processing module 2802 is configured to: determine, based on the first signal, whether to enter a first state; and obtain time and/or frequency synchronization based on the first synchronization signal. The first signal is a signal generated based on a first sequence, the first sequence is a complex sequence, the first synchronization signal is a signal generated based on a second sequence, the second sequence includes a first synchronization sequence or a second synchronization sequence, the first synchronization sequence is a complex sequence, and the second synchronization sequence is a binary sequence.

In some embodiments, the transceiver module 2801 is further configured to send capability information of the first terminal device to the network device, where the capability information includes one or more of the following: whether OOK modulation is supported, whether FSK modulation is supported, or whether generation of a signal based on a complex sequence is supported.

In this embodiment of this application, the terminal device 280 is presented in a form of obtaining each functional module through division in an integrated manner. Herein, "module" may be a specific ASIC, a circuit, a processor that executes one or more software or firmware programs, a memory, an integrated logic circuit, and/or another component capable of providing the foregoing functions. In a simple embodiment, a person skilled in the art may figure out that the terminal device 280 may be in a form of the communication apparatus 100 shown in FIG. 10.

For example, the processor 1001 in the communication apparatus 100 shown in FIG. 10 may invoke computer-executable instructions stored in the memory 1003, so that the communication apparatus 100 performs the signal transmission method in the foregoing method embodiment.

Specifically, functions/implementation processes of the transceiver module 2801 and the processing module 2802 in FIG. 28 may be implemented by the processor 1001 in the communication apparatus 100 shown in FIG. 10 by invoking the computer-executable instructions stored in the memory 1003. Alternatively, a function/implementation process of the processing module 2802 in FIG. 28 may be implemented by the processor 1001 in the communication apparatus 100 shown in FIG. 10 by invoking the computer-executable instructions stored in the memory 1003, and a function/implementation process of the transceiver module 2801 in FIG. 28 may be implemented by the communication interface 1004 in the communication apparatus 100 shown in FIG. 10.

Because the terminal device 280 provided in this embodiment may perform the foregoing signal transmission method, for a technical effect that can be obtained by the terminal device, refer to the foregoing method embodiment. Details are not described herein again.

It should be understood that one or more of the foregoing modules or units may be implemented by using software, hardware, or a combination thereof. When any one of the foregoing modules or units is implemented by using software, the software exists in a form of computer program instructions, and is stored in a memory, and a processor may be configured to execute the program instructions to implement the foregoing method procedure. The processor may be built in a SoC (system on chip) or an ASIC, or may be an independent semiconductor chip. In addition to a core configured to perform an operation or processing by executing software instructions, the processor may further include a necessary hardware accelerator, for example, a field programmable gate array (field programmable gate array, FPGA), a PLD (programmable logic device), or a logic circuit that implements a dedicated logic operation.

When the foregoing modules or units are implemented by using hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device. The hardware may run necessary software or does not depend on software to perform the foregoing method procedures.

Optionally, an embodiment of this application further provides a communication apparatus (for example, the communication apparatus may be a chip or a chip system). The communication apparatus includes a processor, configured to implement the method in any one of the foregoing method embodiments. In a possible design, the communication apparatus further includes a memory. The memory is configured to store necessary program instructions and data. The processor may invoke program code stored in the memory, to indicate the communication apparatus to perform the method in any one of the foregoing method embodiments. Certainly, the communication apparatus may not include a memory. When the communication apparatus is a chip system, the communication apparatus may include a chip, or may include a chip and another discrete component. This is not specifically limited in embodiments of this application.

Optionally, an embodiment of this application further provides a computer-readable storage medium. The computer-readable storage medium stores a computer program or instructions. When the computer program or the instructions are run on a communication apparatus, the communication apparatus is caused to perform the method in any one of the foregoing method embodiments or any one of the implementations of the foregoing method embodiments.

Optionally, an embodiment of this application further provides a communication system. The communication system includes the first network device in the foregoing method embodiment and the terminal device in the foregoing method embodiment.

All or some of the foregoing embodiments may be implemented by using software, hardware, firmware, or any combination thereof. When a software program is used to implement embodiments, all or some of the embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a special-purpose computer, a computer network, or any other programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or step, and "a" or "one" does not exclude a case of "a plurality of". A single processor or another unit may implement several functions enumerated in the claims. Some measures are recorded in dependent claims that are different from each other, but this does not mean that these measures cannot be combined to produce a better effect.

Although this application has been described with reference to specific features and embodiments thereof, it is obvious that various modifications and combinations may be made to this application without departing from the spirit and scope of this application. Correspondingly, this specification and the accompanying drawings are merely example descriptions of this application defined by the appended claims, and are deemed to have covered any and all modifications, variations, combinations, or equivalents that fall within the scope of this application. It is clearly that a person skilled in the art can make various modifications and variations to this application without departing from the spirit and scope of this application. This application is also intended to cover these modifications and variations provided that they fall within the scope defined by the following claims and their equivalent technologies.

## Claims

1. A signal transmission method, wherein the method comprises:

generating a first signal based on a first sequence, wherein the first sequence is a complex sequence, and the first signal indicates a first terminal device whether to enter a first state;
generating a first synchronization signal based on a second sequence, wherein the second sequence is a first synchronization sequence or a second synchronization sequence, the first synchronization sequence is a complex sequence, the second synchronization sequence is a binary sequence, and the first synchronization signal is for time and/or frequency synchronization; and

sending the first signal and the first synchronization signal to the first terminal device.

2. The method according to claim 1, wherein the second sequence is the first synchronization sequence, and the method further comprises:

generating a second synchronization signal based on a third synchronization sequence, wherein the third synchronization sequence is a binary sequence, and the second synchronization signal is used for time and/or frequency synchronization; and

sending the second synchronization signal to a second terminal device.

3. The method according to claim 2, wherein a time domain resource occupied by the second synchronization signal at least partially overlaps a time domain resource occupied by the first signal and/or a time domain resource occupied by the first synchronization signal.

4. The method according to claim 3, wherein the first signal and/or the first synchronization signal occupy/occupies N OFDM symbols in M OFDM symbols, wherein the M OFDM symbols are OFDM symbols occupied by the second synchronization signal, the N OFDM symbols are symbols that carry first elements in the M OFDM symbols, the first elements are ON elements in the third synchronization sequence, M is greater than or equal to N, M and N are integers, and N is greater than or equal to 1.

5. The method according to any one of claims 2 to 4, wherein the method further comprises:

generating a second signal based on a third sequence, wherein the third sequence is a binary sequence, the second signal indicates the second terminal device whether to enter the first state, and a time domain resource occupied by the second signal is different from the time domain resource occupied by the second synchronization signal; and

sending the second signal to the second terminal device.

6. The method according to claim 5, wherein the time domain resource occupied by the second signal at least partially overlaps the time domain resource occupied by the first signal and/or the time domain resource occupied by the first synchronization signal.

7. The method according to claim 6, wherein the first signal and/or the first synchronization signal occupy/occupies N OFDM symbols in M OFDM symbols, wherein the M OFDM symbols are OFDM symbols occupied by the second signal, the N OFDM symbols are symbols that carry first elements in the M OFDM symbols, and the first elements are ON elements in the third sequence, M is greater than or equal to N, M and N are integers, and N is greater than or equal to 1.

8. The method according to any one of claims 1 to 7, wherein the method further comprises:
receiving capability information from the first terminal device and/or the second terminal device, wherein the capability information comprises one or more of the following: whether on-off keying OOK modulation is supported, whether frequency-shift keying FSK modulation is supported, or whether generation of a signal based on a complex sequence is supported.

9. A signal transmission method, wherein the method comprises:

receiving a first signal and a first synchronization signal from a network device, wherein the first signal is a signal generated based on a first sequence, the first sequence is a complex sequence, the first synchronization signal is a signal generated based on a second sequence, the second sequence comprises a first synchronization sequence or a second synchronization sequence, the first synchronization sequence is a complex sequence, and the second synchronization sequence is a binary sequence;
determining, based on the first signal, whether to enter a first state; and
obtaining time and/or frequency synchronization based on the first synchronization signal.

10. The method according to claim 9, wherein the method further comprises:
sending capability information to the network device, wherein the capability information comprises one or more of the following: whether OOK modulation is supported, whether FSK modulation is supported, or whether generation of a signal based on a complex sequence is supported.

11. The method according to any one of claims 1 to 10, wherein the first synchronization sequence is the same as a sequence for generating a primary synchronization signal PSS and/or a secondary synchronization signal SSS.

12. The method according to claim 11, wherein a frequency domain resource occupied by the first synchronization signal is greater than or equal to a frequency domain resource occupied by the PSS or the SSS.

13. The method according to claim 11 or 12, wherein the time domain resource occupied by the first synchronization signal comprises a time domain resource occupied by the PSS and/or a time domain resource occupied by the SSS.

14. The method according to any one of claims 11 to 13, wherein the second sequence is the first synchronization sequence; and

the first synchronization signal is a cell defining synchronization signal/physical broadcast channel block CD-SSB, and a frequency domain resource occupied by the first signal comprises the CD-SSB; or
the first synchronization signal is a non-cell defining synchronization signal/physical broadcast channel block NCD-SSB, and a frequency domain resource occupied by the first signal does not comprise the CD-SSB.

15. The method according to any one of claims 1 to 10, wherein the second sequence is the second synchronization sequence; and the time domain resource occupied by the first synchronization signal at least partially overlaps the time domain resource occupied by the first signal.

16. The method according to claim 15, wherein the first signal occupies N orthogonal frequency division multiplexing OFDM symbols in M OFDM symbols, wherein the M OFDM symbols are OFDM symbols occupied by the first synchronization signal, the N OFDM symbols are symbols that carry first elements in the M OFDM symbols, the first elements are ON elements in the second synchronization sequence, M is greater than or equal to N, M and N are integers, and N is greater than or equal to 1.

17. The method according to any one of claims 1 to 10, 15, and 16, wherein the second sequence is the second synchronization sequence, and the method further comprises:

generating the second signal based on the third sequence, wherein the third sequence is a binary sequence, the second signal indicates the second terminal device whether to enter the first state, and the time domain resource occupied by the second signal is different from the time domain resource occupied by the first synchronization signal; and
sending the second signal and the first synchronization signal to the second terminal device.

18. The method according to claim 17, wherein the time domain resource occupied by the second signal at least partially overlaps the time domain resource occupied by the first signal.

19. The method according to claim 18, wherein the first signal occupies the N OFDM symbols in the M OFDM symbols, wherein the M OFDM symbols are OFDM symbols occupied by the second signal, the N OFDM symbols are symbols that carry first elements in the M OFDM symbols, and the first elements are ON elements in the third sequence, M is greater than or equal to N, M and N are integers, and N is greater than or equal to 1.

20. The method according to any one of claims 1 to 19, wherein the first sequence carries at least some information in target identification information, and the target identification information comprises one or more of the following: identification information of a target terminal device, identification information of a target cell, identification information of a target terminal device group, identification information of a tracking area, or identification information of a radio access network RAN area.

21. The method according to any one of claims 1 to 20, wherein the first sequence comprises one or more of the following sequences: a Zadoff-Chu sequence, an m-sequence, or a gold sequence.

22. A communication apparatus, wherein the communication apparatus is configured to perform the signal transmission method according to any one of claims 1 to 8 and claims 11 to 21.

23. A communication apparatus, wherein the communication apparatus is configured to perform the signal transmission method according to any one of claims 9 to 21.

24. A communication apparatus, comprising:
a processor, wherein the processor is coupled to a memory, and the processor is configured to execute a computer program stored in the memory, so that the communication apparatus performs the signal transmission method according to any one of claims 1 to 8 and claims 11 to 21, or the communication apparatus performs the signal transmission method according to any one of claims 9 to 21.

25. A communication apparatus, comprising:

   a processor and an interface circuit, wherein the interface circuit is configured to receive code instructions and transmit the code instructions to the processor, wherein
   the processor is configured to run the code instructions, so that the communication apparatus performs the signal transmission method according to any one of claims 1 to 8 and 11 to 21, or the communication apparatus performs the signal transmission method according to any one of claims 9 to 21.

26. A communication apparatus, wherein the communication apparatus comprises a processor and a transceiver, the transceiver is configured to exchange information between the communication apparatus and another communication apparatus, and the processor executes program instructions, so that the communication apparatus performs the signal transmission method according to any one of claims 1 to 8 and 11 to 21, or the communication apparatus performs the signal transmission method according to any one of claims 9 to 21.

27. A computer-readable storage medium, wherein the computer-readable storage medium comprises a computer program or instructions, and when the computer program or the instructions are run on a computer, the computer is caused to perform the signal transmission method according to any one of claims 1 to 8 and 11 to 21, or the computer is caused to perform the signal transmission method according to any one of claims 9 to 21.

28. A chip system, comprising at least one processor and an interface, wherein the at least one processor is coupled to a memory through the interface, and when the at least one processor executes a computer program or instructions in the memory, the method according to any one of claims 1 to 8 and 11 to 21 is performed, or the method according to any one of claims 9 to 21 is performed.

29. A computer program product, wherein the computer program product comprises instructions, and when the instructions are run, the signal transmission method according to any one of claims 1 to 8 and 11 to 21 is implemented, or the signal transmission method according to any one of claims 9 to 21 is implemented.

30. A communication system, wherein the communication system comprises a network device and a first terminal device, the network device is configured to perform the signal transmission method according to any one of claims 1 to 8 and 11 to 21, and the first terminal device is configured to perform the signal transmission method according to any one of claims 9 to 21.

[FIG. 1]

On duration

Sleep time

Sleep time

DRX cycle

[FIG. 2]

$a_0$

$a_1$

$a_2$

$\vdots$

$a_{n-1}$

Resource mapping

Inverse fast Fourier transformation

Cyclic prefix

[FIG. 3]

[FIG. 4]

Network device

SSB N

SSB 0

[FIG. 5]

Terminal device

Wake-up receiver

Main receiver

[FIG. 6]

Digital signal

(a)

Amplitude

Carrier

(b)

Modulated signal

Symbol #1  Symbol #2  Symbol #3  Symbol #4  Symbol #5

(c)

Time

Indicating a digital signal "0"

Indicating a digital signal "1"

EP 4 657 808 A1

[FIG. 7]

[FIG. 8]

Bit                          1                              0

Time domain
waveform

Amplitude

[FIG. 9]

[FIG. 10]

[FIG. 11]

[FIG. 12]

[FIG. 13]

| Network device | First terminal device |
|---|---|
| S1301: Generate a first signal based on a first sequence | |
| S1302: Generate a first synchronization signal based on a second sequence | |

S1303: First signal and first synchronization signal

S1304: Obtain time and/or frequency synchronization based on the first synchronization signal

S1305: Determine, based on the first signal, whether to enter a first state

S1306: Capability information of the first terminal device

[FIG. 14]

First synchronization signal

First signal

Frequency domain

Time domain

[FIG. 15]

First synchronization signal

First signal

Frequency domain

NCD-SSB

Frequency domain resource #2 occupied by the first signal

CD-SSB

Frequency domain resource #1 occupied by the first signal

Time domain

[FIG. 16]

Second sequence    1    0    1    0    1

Time domain waveform

OFDM #1   OFDM #2   OFDM #3   OFDM #4   OFDM #5

[FIG. 17]

Frequency
domain

☒ First synchronization
   signal

☐ First signal

Time domain

[FIG. 18]

Second synchronization
sequence

1　　　0　　　1　　　0　　　1

First synchronization
signal

Amplitude

OFDM #1 OFDM #2　OFDM #3 OFDM #4 OFDM #5

Time

First signal

First
sequence

First
sequence

First
sequence

Frequency
domain

Time domain

[FIG. 19]

Frequency
domain

☒ First synchronization
   signal

☐ First signal

First time
interval

Time domain

[FIG. 20]

[FIG. 21]

| Network device | First terminal device | Second terminal device |
|---|---|---|

S2101: Generate a first signal based on a first sequence

S2102: Generate a first synchronization signal based on a second sequence

S2103: First signal and first synchronization signal

S2104: Obtain time and/or frequency synchronization based on the first synchronization signal

S2105: Determine, based on the first signal, whether to enter a first state

S2106: Generate a second signal based on a third sequence

S2107: Second signal and first synchronization signal

S2108: Obtain time and/or frequency synchronization based on the first synchronization signal

S2109: Determine, based on the second signal, whether to enter the first state

[FIG. 22]

[FIG. 23]

| Network device | First terminal device | Second terminal device |
|---|---|---|

S2301: Generate a first signal based on a first sequence

S2302: Generate a first synchronization signal based on a first synchronization sequence

S2303: First signal and first synchronization signal

S2304: Obtain time and/or frequency synchronization based on the first synchronization signal

S2305: Determine, based on the first signal, whether to enter a first state

S2306: Generate a second synchronization signal based on a third synchronization sequence

S2307: Second synchronization signal

S2308: Obtain time and/or frequency synchronization based on the second synchronization signal

S2309: Generate a second signal based on a third sequence

S2310: Second signal

S2311: Determine, based on the second signal, whether to enter the first state

[FIG. 24]

[FIG. 25]

EP 4 657 808 A1

[FIG. 26 ]

EP 4 657 808 A1

[FIG. 27]

Network device 270

Transceiver module 2701

Processing module 2702

[FIG. 28]

Terminal device 280

Transceiver module 2801

Processing module 2802

## INTERNATIONAL SEARCH REPORT

| International application No. |
| --- |
| **PCT/CN2024/076461** |

| A. | CLASSIFICATION OF SUBJECT MATTER |
| --- | --- |
| | H04L 27/26(2006.01)i |

According to International Patent Classification (IPC) or to both national classification and IPC

| B. | FIELDS SEARCHED |
| --- | --- |

Minimum documentation searched (classification system followed by classification symbols)

    IPC:H04W,H04L,H04Q

Documentation searched other than minimum documentation to the extent that such documents are included in the fields searched

Electronic data base consulted during the international search (name of data base and, where practicable, search terms used)

    CNKI, VEN, EXTXTC, WPABS, CNTXT, 3GPP: 产生, 生成, 复数, 唤醒, 同步, 序列, Chu-Zadoff, gold, WUS, ZC, generation, complex, awake, synchronization, sequence

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 111316198 A (GUANGDONG OPPO MOBILE TELECOMMUNICATIONS CORP., LTD.) 19 June 2020 (2020-06-19)<br>    description, page 11, line 20 to page 13, line 9, and claims 1-52 | 1-30 |
| X | CN 109495925 A (VIVO MOBILE COMMUNICATION CO., LTD.) 19 March 2019 (2019-03-19)<br>    description, paragraphs 36-156 | 1-30 |
| A | CN 111049630 A (VIVO MOBILE COMMUNICATION CO., LTD.) 21 April 2020 (2020-04-21)<br>    entire document | 1-30 |
| A | US 2022394680 A1 (LG ELECTRONICS, INC.) 08 December 2022 (2022-12-08)<br>    entire document | 1-30 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **06 May 2024** | **10 May 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
| --- |
| **PCT/CN2024/076461** |

| Patent document cited in search report | | | Publication date (day/month/year) | Patent family member(s) | | | Publication date (day/month/year) |
| --- | --- | --- | --- | --- | --- | --- | --- |
| CN | 111316198 | A | 19 June 2020 | WO | 2019047131 | A1 | 14 March 2019 |
| | | | | EP | 3680751 | A1 | 15 July 2020 |
| | | | | KR | 20200052324 | A | 14 May 2020 |
| | | | | US | 2020205218 | A1 | 25 June 2020 |
| | | | | JP | 2021500768 | A | 07 January 2021 |
| CN | 109495925 | A | 19 March 2019 | WO | 2019047884 | A1 | 14 March 2019 |
| CN | 111049630 | A | 21 April 2020 | None | | | |
| US | 2022394680 | A1 | 08 December 2022 | WO | 2020032733 | A1 | 13 February 2020 |
| | | | | CN | 112703693 | A | 23 April 2021 |
| | | | | EP | 3836464 | A1 | 16 June 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310172364